# EUROPÄISCHE PATENTSCHRIFT

(11) **EP 4 217 181 B1**
(45) Veröffentlichungstag und Bekanntmachung des Hinweises auf die Patenterteilung: **06.03.2024**
(21) Anmeldenummer: 20776145.3
(22) Anmeldetag: 22.09.2020
(51) Int. Cl.: B29C 64/124, B22F 12/00, B22F 10/00, B33Y 70/00, B33Y 30/00, B33Y 10/00, B29C 64/40, B29C 64/35, B29C 64/268, B29C 64/245, B29C 64/205, B22F 10/25, B22F 10/43, B22F 12/41, B22F 12/50, B29C 64/141, B33Y 40/20

(54) **VERFAHREN UND 3D-DRUCKVORRICHTUNG ZUR SCHICHTWEISEN HERSTELLUNG VON OBJEKTEN MITTELS LASERTRANSFERDRUCK**
METHOD AND 3D PRINTING METHOD FOR LAYER-BY-LAYER FABRICATION OF OBJECTS USING LAYER TRANSFER PRINTING
MÉTHODE ET MÉTHODE D'IMPRESSION 3D POUR LA FABRICATION COUCHE PAR COUCHE D'OBJETS À L'AIDE D'UNE IMPRESSION PAR TRANSFERT À LASER

(43) Veröffentlichungstag der Anmeldung: 02.08.2023
(73) Patentinhaber: Wacker Chemie AG, 81737 München (DE)
(72) Erfinder: ELLER, Klaus, 84489 Burghausen (DE); NEUWIRTH, Johannes, 5110 Oberndorf (AT)
(74) Vertreter: Bitterlich, Bianca
(86) Internationale Anmeldenummer: PCT/EP2020/076421
(87) Internationale Veröffentlichungsnummer: WO 2022/063393

(56) Entgegenhaltungen:
- WO-A1-2020/152352
- WO-A1-2020/156632
- WO-A1-2020/184525
- US-A1- 2018 200 948
- US-A1- 2020 172 747

## Beschreibung

Die Erfindung betrifft ein neues 3D-Druck-Verfahren zur schichtweisen Herstellung von Objekten mittels Lasertransferdruck sowie eine 3D-Druckvorrichtung zur Durchführung dieses Verfahrens. Dabei wird auf einen Trägerzylinder aufgetragene Druckmasse mit einem Laser bestrahlt, abgelöst und auf eine Basisplatte transferiert. Die entstehenden Druckmassenschichten werden anschließend ausgehärtet und der Vorgang so oft wiederholt bis das Objekt vollständig aufgebaut ist. Mithilfe des erfindungsgemäßen Verfahrens können Objekte aus einer Vielzahl von möglichen Druckmaterialien mit hohem Durchsatz (über 1 kg/h) ohne Beeinträchtigung der Druckqualität gedruckt werden.

### Stand der Technik

Beim 3D-Druck werden dreidimensionale Objekte schichtweise aufgebaut. Der Aufbau erfolgt computergesteuert aus einem oder mehreren flüssigen oder festen Materialien nach vorgegebenen Geometrien aus dem CAD (Computer Aided Design). Beim Aufbau finden physikalische oder chemische Härtungs- oder Erstarrungsprozesse statt. Typische Werkstoffe für das 3D-Drucken sind Kunststoffe, Kunstharze, Keramik und Metalle. 3D-Drucker werden in der Industrie, der Forschung und auch im Konsumentenbereich eingesetzt. Der 3D-Druck ist ein generatives Fertigungsverfahren und wird auch als additive Fertigung bezeichnet.

3D-Drucker dienen zunächst vor allem der Herstellung von Prototypen und Modellen, sowie der Herstellung von Objekten, von denen nur geringe Stückzahlen benötigt werden. Wachsende Bedeutung haben individualisierte Geometrien in Medizin und Sport, aber auch Objekte, die mit anderen Verfahren gar nicht herstellbar sind. Ein Beispiel sind Objekte mit innen liegenden Gitterstrukturen.

Gegenüber dem Spritzgussverfahren hat das 3D-Drucken den Vorteil, dass aufwendige Herstellung von Werkzeugen und Formen entfällt. Gegenüber allen Material abtragenden Verfahren wie spanender Bearbeitung (z.B. Drehen, Bohren, Schleifen, Fräsen), hat das 3D-Drucken den Vorteil, dass die Bearbeitung der Rohform entfällt und kaum Materialverlust auftritt.

Generative Fertigungsverfahren (Additive Manufacturing; 3D-Druck) umfassen zahlreiche unterschiedliche Techniken, denen ein automatisierter additiver Schichtaufbau des Formteils gemeinsam ist (A. Gebhardt, Generative Fertigungsverfahren, Carl Hanser Verlag, München 2013). Voraussetzung aller generativen Herstellverfahren ist die Darstellung der Geometrie sowie ggf. weiterer Eigenschaften (z.B. Farbe, Materialzusammensetzung) des gewünschten Formteils in Form eines digitalen 3D-Datensatzes, welcher als virtuelles Modell des Formteils verstanden werden kann. Diese Modellierung erfolgt vorzugsweise mittels diverser 3D-CAD-Konstruktionsverfahren (computer-aided design). Als Eingangsdaten für die Erstellung eines 3D-CAD-Modells können auch 3D-Messdaten dienen, wie diese z.B. aus CT-Messungen (Computer Tomographie) oder MRT-Messungen (Magnet Resonanz Tomographie) resultieren. Der 3D-CAD-Datensatz muss nachfolgend durch material-, verfahrens- und anlagenspezifische Daten ergänzt werden, was dadurch erfolgt, dass dieser über eine Schnittstelle (Interface) in einem geeigneten Format (z.B. STL-, CLI/SLC-, PLY-, VRML-, AMF-Format) an eine Additive Manufacturing Software übergeben wird. Diese Software erzeugt aus den geometrischen Informationen letztlich virtuelle Einzelschichten (slicen), wobei die optimale Orientierung des Bauteils im Bauraum, Stützstrukturen etc. Berücksichtigung erfahren. Der vollständige Datensatz erlaubt schließlich die direkte Ansteuerung der für die generative Fertigung eingesetzten Maschine (3D-Drucker).

Der Software-Ablauf ist beispielsweise wie folgt:
1. Konstruktion des Bauteils im CAD-Format
2. Export in das STL-Datenformat
3. Aufteilung des 3D-Modells in Schichten parallel zur Druckebene und Generierung des GCode
4. Übertragung des GCode an die Druckersteuerung

Generative Fertigungsverfahren stehen für zahlreiche Materialien sowie deren Kombinationen zur Verfügung (z.B. Metalle, Kunststoffe, Keramiken, Gläser).

Beispielsweise existieren für die additive Fertigung von Objekten bereits mehrere etablierte Verfahren wie
- Fused Deposition Modelling (FDM) für Kunststoffe und spezielle Kunstharze
- Stereolithografie für flüssige Kunstharze
- Lasersintern für Metalle, Polymere und Keramik
- Elektronenstrahlschmelzen für Metalle
Ebenfalls bekannt sind Verfahren, bei denen Druckmasse mittels

Tröpfchendosierung (dem so genannten Jetting) oder kontinuierlichem Extrudieren eines Strangs (beim so genannten Dispens- oder Extrusions-Verfahren) abgeschieden wird und anschließend beispielsweise durch Einwirkung von UV-Strahlung ausgehärtet oder anderweitig verfestigt wird.

Gängige 3D-Druckverfahren sind beispielsweise in WO2006020685 A2, WO2013091003 A1, WO2015059502 A1 und WO2016071241 A1 beschrieben Alle bekannten Verfahren zum 3D-Druck sind bisher nicht für die Herstellung präziser Objekte bei hohem Durchsatz geeignet. Nachteilig sind insbesondere die geringen Durchsätze der einzelnen Technologien (deutlich unter 1 kg/h) und Beschränkungen bezüglich der möglichen Materialien für die Druckmassen, insbesondere deren chemischen wie physikalischen Eigenschaften (z.B. Einschränkungen bezüglich der Art, Viskosität, Füllstoffgehalt, Lösemittelgehalt).

Bisher ist kein ausreichend präzises 3D-Druck-Verfahren bekannt, welches die Herstellung von Objekten mit einem Durchsatz größer 1 kg/h ermöglicht und gleichzeitig für eine Vielzahl von Druckmassen (objektbildende Materialien oder Stützmaterialien) geeignet ist.

CN1 10666169 A offenbart eine 3D-Druckvorrichtung die im Batchbetrieb über ein Lasertransferverfahren 3D-Objekte erzeugt. Dabei werden Metalle als 3D-Druckmaterial in einem separaten Prozess mittels Magnetronsputtering auf Einzelträger aufgebracht und per Hand in eine Laser- und Verfahrapparatur eingespannt. Ein kontinuierlicher Druck ist dabei nicht möglich.

WO 2020/184525 A1 offenbart eine Vorrichtung und ein Verfahren zum Modellieren eines dreidimensionalen modellierten Objekts, umfassend einen Träger, der so konfiguriert ist, dass er ein Modelliermaterial trägt; eine Energieaufbringungseinheit, die so konfiguriert ist, dass sie Energie auf eine Oberfläch eines modellierten Objekts aufbringt; und eine Flugeinheit, die so konfiguriert ist, dass sie das auf dem Träger getragene Modelliermaterial in Richtung der Oberfläche des modellierten Objekts fliegt, wobei die Energie auf die Oberfläche aufgebracht wird.

Aufgabe der vorliegenden Erfindung war es daher, ein generatives 3D-Druckverfahren bereitzustellen, das zu einem qualitativ hochwertigen Druck bei möglichst kurzen Druckzeiten und damit verbundenen hohen Durchsätzen führt. Insbesondere sollte sichergestellt sein, dass die Druckmassen ohne Trajektoriefehler an der vorgesehen Zielposition platziert werden. Gleichzeitig soll das Verfahren für eine Vielzahl von verschiedenen Druckmassen geeignet sein.

Diese Aufgabe wird überraschenderweise durch das erfindungsgemäße Verfahren und die erfindungsgemäße Vorrichtung gelöst. Die vorliegende Erfindung ermöglicht den Druck von Objekten mit hohem Durchsatz von größer als 1 kg/h ohne die Druckqualität der Objekte zu beeinträchtigen.

### Abbildungen

Figur 1 zeigt eine Produktionsanlagenverbundsystem-Prozessskizze zur Herstellung von 3D-Druckteilen.
Figur 2 zeigt eine Aufbauskizze einer 3D-Druckeinheit.
Figur 3 zeigt eine Aufbauskizze einer Inspektionseinheit.
Figur 4 zeigt eine Aufbauskizze einer Nachbehandlungseinheit.
Figur 5 zeigt eine Skizze eines LIFT-3D-Druckmodules mit Ablösevorgang und Druckmassenplatzierung.
Figur 6 zeigt den Prozessablauf des Druckmaterials für ein LIFT-3D-Druckmodul.

### Beschreibung der Erfindung

Die Erfindung betrifft ein Verfahren zur schichtweisen Herstellung von Objekten mittels Lasertransferdruck in einer 3D-Druckvorrichtung gemäß des unabhängigen Anspruchs 1.

Des Weiteren betrifft die vorliegende Erfindung eine 3D-Druckvorrichtung zur Herstellung von Objekten mittels Lastertransferdruck gemäß des unabhängigen Anspruchs 13.

Da das erfindungsgemäße Verfahren zur schichtweisen Herstellung von Objekten bevorzugt mit der erfindungsgemäßen 3D-Druckvorrichtung durchgeführt wird, ist die nachfolgende Beschreibung so zu verstehen, dass im Rahmen des Verfahrens beschriebene Merkmale gleichermaßen für die 3D-Druckvorrichtung offenbart werden und umgekehrt im Rahmen der 3D-Druckvorrichtung beschriebene Merkmale gleichermaßen für das Verfahren offenbart werden.

Gängige Lasertransferdruck-Prozesse (LIFT = Laser Induced Forward Transfer) sind in der Literatur ausreichend beschrieben und gehören zum Stand der Technik. Eine spezielle Anwendung ist beispielsweise in WO2020156632 A1 beschrieben. Vorzugsweise ist die Platte (28) unterhalb des Trägerzylinders (51) angeordnet.

In einer Ausführungsform bleibt das Druckmodul (20), welches den Trägerzylinder (51) umfasst, während des Druckvorgangs ortsfest, während die Platte (28) beweglich ausgestattet ist. Diese Konstellation ist jedoch aufgrund der geringeren Stabilität und dynamischen Einflüssen auf die Druckkörper weniger bevorzugt. Der Trägerzylinder selbst bleibt in dieser Konstellation drehbar, wenn auch das Druckmodul als Ganzes ortsfest bleibt.

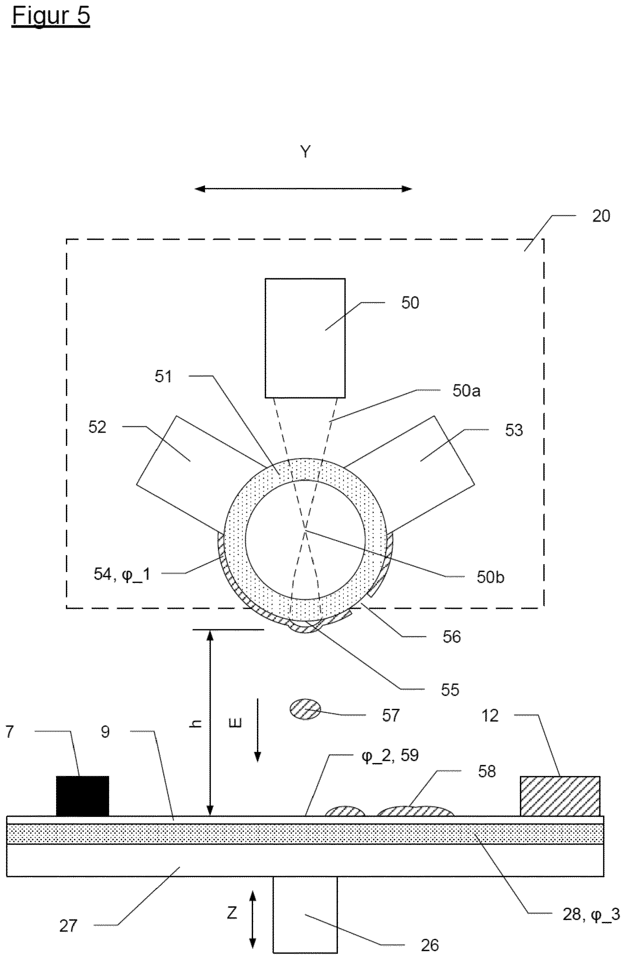

Die exakte örtliche Positionierung der Druckmassen wird vorzugsweise durch eine Bewegung der Platte (28) in Z-Richtung (entspricht in Figur 5 der Achse hoch/runter) und in Y-Richtung (entspricht in Figur 5 der Achse links/rechts) sowie eine Ablenkung durch die Laserquelle (50) in X-Richtung (entspricht in Figur 5 der Achse vorne/hinten) vorgenommen.

In einer alternativen Ausführungsform bleibt die Platte (28) ortsfest, während das Druckmodul beweglich ausgestaltet ist.

Die exakte örtliche Positionierung der Druckmassen wird vorzugsweise durch eine Bewegung des Druckmoduls (20) in Z-Richtung und in Y-Richtung sowie eine Ablenkung durch die Laserquelle (50) in X-Richtung vorgenommen.

In einer besonders bevorzugten Ausführungsform ist das Druckmodul (20), welches den Trägerzylinder (51) umfasst, als auch die Platte (28) in einer oder mehrere Richtungen (X, Y und/oder Z) beweglich ausgestaltet.

Die exakte örtliche Positionierung der Druckmassen wird vorzugsweise durch eine Bewegung der Platte (28) in Z-Richtung sowie eine Bewegung des Druckmodules (20) in Y-Richtung und eine Ablenkung durch die Laserquelle (50) in X-Richtung vorgenommen. Diese Konstellation ist technisch am einfachsten zu realisieren und daher bevorzugt gegenüber den anderen Konstellationen.

Daneben sind auch Mischvarianten der beschriebenen Konstellationen möglich, bei denen eine oder mehrere Komponenten in eine oder mehrere Richtungen (X, Y und/oder Z) beweglich ausgestaltet sind und ggf. eine oder mehrere Komponenten ortsfest ausgestaltet sind.

Die Positionsdaten werden durch die übergeordnete Steuerung (14) den Positionierungs- und Ablenksystem vorgegeben.

Die Laserquelle ist oberhalb des Trägerzylinders (51) angeordnet, so dass die Laserstrahlen (50a) direkt durch beide Wände des Trägerzylinders (51) auf die auf der unteren Seite des Trägerzylinders aufgetragene Druckmasse gerichtet werden können.

Nicht gemäß der Erfindung kann die Laserquelle (50) auch in jeder beliebigen Position (innerhalb oder außerhalb) zum Trägerzylinder befinden. Vorzugsweise werden in diesem Fall die Laserstrahlen über einen oder mehrere Spiegel im Inneren des Trägerzylinders, durch nur eine Wand auf die auf den Trägerzylinder aufgetragene Druckmasse gerichtet.

Die Spiegel können beweglich oder starr ausgestaltet sein, vorzugsweise beweglich. Bewegliche Spiegel haben den Vorteil, dass sie die Laserstrahlen variabel auf bestimmte Bereiche der Druckmasse gerichtet werden können. In einer besonderen Ausführungsform befindet sich wenigstens ein beweglicher Spiegel innerhalb des Trägerzylinders.

Der Trägerzylinder (51) hat vorzugsweise einen Außendurchmesser im Bereich von 50 mm bis 300 mm, besonders bevorzugt im Bereich 70 mm bis 150 mm, insbesondere bevorzugt im Bereich von 80 mm bis 120 mm.

Der Trägerzylinder (51) kann kompakt oder hohl ausgestaltet sein. Vorzugsweise ist der Trägerzylinder (51) hohl ausgestaltet. In diesem Fall hat der Trägerzylinder (51) vorzugsweise eine Wanddicke im Bereich von 1 mm bis 20 mm, besonders bevorzugt im Bereich von 3 mm bis 15 mm, insbesondere bevorzugt im Bereich von 6 mm bis 12 mm.

Der Trägerzylinder (51) hat vorzugsweise eine Länge im Bereich von 20 mm bis 600 mm, besonders bevorzugt von 100 mm bis 400 mm, insbesondere bevorzugt von 150 mm bis 300 mm.

Der Toleranzbereich für Abweichungen der geometrischen Abmessungen des Trägerzylinders (51) liegt vorzugsweise im Bereich von unter 500 µm, besonders bevorzugt unter 100 µm, insbesondere bevorzugt unter 10 µm.

Die Oberflächenrauheit (Ra) des Trägerzylinders (51) liegt vorzugsweise unter 10 µm, besonders bevorzugt unter 100 nm, gemessen mittels konfokalem Laserscanning Mikroskop (z.B. VK-X1000 der Firma Keyence).

Die Oberflächen werden vorzugsweise poliert und können optional mit Antireflex-Beschichtungen ausgestattet werden.

Die auf den Trägerzylinder (51) aufgetragene Druckmassenschicht (54) hat vorzugsweise eine Schichtdicke von 1 µm bis 1.000 µm, besonders bevorzugt von 10 µm bis 500 µm, insbesondere bevorzugt von 50 µm bis 150 µm.

Der Abstand h (vgl. Figur 5) zwischen beschichtetem Trägerzylinder (51) und Platte (28) liegt vorzugsweise in einem Bereich von 20 µm bis 600 µm, besonders bevorzugt von 80 µm bis 400 µm, insbesondere bevorzugt von 100 µm bis 200 µm.

In vielen Ausführungen des bekannten LIFT-Verfahrens, wird auf die Fokussierung des Laserstrahls auf die Grenzfläche Druckmasse und Trägersystems verwiesen. In der Ausführung mit Siliconzusammensetzungen hat die Position des Laserfokuspunktes (50b) innerhalb des Trägerzylinders und oberhalb der Grenzfläche zwischen Druckmasse und Trägerzylinder ein besseres Druckbild zur Folge. Der Fokuspunkt liegt dabei im Bereich einiger Mikrometer bis einiger Millimeter oberhalb der Grenzschicht Trägerzylinder /Druckmasse. Eine Fokussierung des Laserstrahls auf, innerhalb oder unter der Grenzfläche ergibt zunächst eine Ablösung, jedoch führt dies anschließend zu einer erheblichen Nacherwärmung auf der Zieloberfläche und ggf. zu einem Verbrennen oder thermischen Degenerieren der applizierten Druckmasse (58).

Bevorzugt wird der Fokuspunkt der Laserstrahlen so gewählt wird, dass er sich innerhalb des Trägerzylinders in einem Bereich von 0,01 mm bis 10 mm, vorzugsweise von 0,1 mm bis 5 mm, insbesondere bevorzugt von 1 mm bis 3 mm oberhalb der Grenzfläche zwischen Druckmasse und Trägerzylinder befindet.

Gängige Laserquellen sind beispielsweise Nd:YAG-Laser (Neodym-dotierten Yttrium-Aluminium-Granat-Laser) und geben Laserstrahlung im Bereich NIR (Near Infrared) ab. Diese Wellenlängen werden bei den meisten Lasersystemen zum Einkoppeln in opake Medien verwendet. Vorteilhaft ist hier die Verwendung von Trägermaterial wie Glas und Quarzglas für den Trägerzylinder. Nachteilig ist hierbei die Notwendigkeit Absorber-Zusätze wie Bsp. Ruß, Graphite, CNT in transparenten Siliconelastomeren. Elektrisch nichtleitende Absorber sind beispielsweise bei der FEW Chemicals GmbH, Deutschland kommerziell erhältlich.

In einer besonderen Ausführung erfolgt die Bestrahlung mit einem Laser im MIR (mittlerer Infrarot Bereich). Gängige Laserquellen sind hierbei in einem Wellenlängenbereich von 8-12 µm, bevorzugt 10,6 µm (CO₂-Laser). In dieser speziellen Konfiguration können transparente Siliconelastomere, sowie variable Stützmassen ohne Zusätze von Absorbern verwendet werden. Technisch ist hierbei jedoch der Trägerzylinder als optisch durchgängig für die entsprechenden Wellenlängen auszuführen. Vorzugsweise wird hierbei bei einer Wellenlänge von 10,6 µm ZnSe-Glas (Zinkselenid) verwendet. Besonders bevorzugt werden hierbei Antireflexionsbeschichtungen an den Grenzflächen verwendet. Erhältlich sind diese beispielsweise bei der Firma LASER COMPONENTS GmbH, Deutschland.

Das Material des Trägerzylinders wird vorzugsweise aus der Gruppe bestehend aus Glas, Quarzglas, Polyethylenterephthalat, Polycarbonat, Polyimid, Polymethylmethacrylat (PMMA), ZnSe, ZnS, BaF₂, CaF₂, Ge, KBr, NaCl, MgF₂, LiF und Si ausgewählt.

Besonders bevorzugt wird hierbei jedoch die Verwendung von Silicium als Material für den Trägerzylinder. Insbesondere bevorzugt ist die Verwendung von Reinstsilicium in monokristalliner Form, vorzugsweise mit definierter Gitterausrichtung. Insbesondere bevorzugt ist mittels Zonenschmelzverfahren (Float-Zone-Verfahren) hergestelltes Silicium mit einem spezifischen Widerstand größer als 1.000 Ohm*cm. Erhältlich ist solches Reinstsilicium beispielsweise bei der Wacker Chemie AG, Deutschland. Monokristallines Silicium ist beispielsweise bei der Siltronic AG, Deutschland erhältlich.

Die Art der Aushärtung ist abhängig von der Druckmasse zu wählen. Die Aushärtung erfolgt vorzugsweise durch Wärmezufuhr, elektromagnetischer Strahlung und/oder Feuchtigkeit. Besonders bevorzugt erfolgt die Aushärtung durch elektromagnetische Strahlung, wie zum Beispiel IR, UV und/oder UV-VIS-Strahlung, insbesondere beim Einsatz von Siliconzusammensetzungen. Bei thermoplastischen Kunststoffen als Druckmasse ist auch eine Aushärtung durch Abkühlung möglich.

Vorzugsweise umfasst die 3D-Druckvorrichtung wenigstens ein Aushärtemodul, das dazu eingerichtet ist, die Druckmasse auszuhärten.

Die Aushärtung der Druckmasse kann auch über den Laserstrahl der Laserquelle erfolgen.

Es können auch verschiedene Aushärtestrategien gewählt werden, z.B. zunächst partielles Aushärten von Druckmaterial um eine spätere Modifikation vornehmen zu können.

Die einzelnen Druckmassen können weiterhin mit unterschiedlichen Methoden ausgehärtet werden.

In einer weiteren Ausführungsform wird der Druckkörper nach dem Druck mechanisch gedehnt oder gestaucht und dabei die Härtung der noch nicht ausgehärteten Druckmassen vorgenommen werden.

Vor dem und/oder beim Aushärten kann zusätzlich eine elektrische Spannung an das Bauteil angelegt werden, wobei eine elektrische Kontaktierung über Bereiche nicht ausgehärteter Druckmassen erfolgt und eine Härtung nach Anbringen dieser durchgeführt wird.

Verfahren und Beispiele für eine Modifikation durch Felder und mechanische Deformation sind dem Fachmann aus der Herstellung von ferroelektrischen Polyvinylidenfluorid(PVDF)-Folien bekannt.

Die Aushärtung kann auch mit energiereicher Strahlung, wie z.B. Elektronenstrahlung (E-Beam) oder Cobalt-60-Strahlung erfolgen. Eine Vielzahl von Verfahren zur E-Beam-Härtung, sind im Stand der Technik bekannt.

In einer bevorzugten Ausführungsform ist auf der Platte ein Durchlaufband (9) beweglich angeordnet. In Schritt (b) wird die Druckmasse dann auf das Durchlaufband (9), auf ein darauf positioniertes Fremdbauteil (7) oder auf eine zuvor aufgebrachte Druckmassenschicht (58) transferiert. Das Durchlaufband (9) ermöglicht die Ein- und Ausschleusung zu den verschiedenen Modulen der 3D-Druckvorrichtung (z.B. Druckmodul, Aushärtemodul, Inspektionseinheit, etc.). Vorzugsweise umfasst die 3D-Druckvorrichtung wenigstens einen Bandzuführer (10) und ein Bandspeicher (18) für das Umlaufband (9).

In einer weiteren Ausführungsform umfasst die 3D-Druckvorrichtung wenigstens eine Bestückungseinheit (8) und/oder Entnahmeeinheit (13), die dazu eingerichtet sind Fremdbauteile (7) und/oder das gedruckte Objekt (12) auf die Platte (28) oder auf das Durchlaufband (9) zu positionieren und/oder von der Platte (28) oder vom Durchlaufband (9) zu entnehmen.

Alternativ zum kontinuierlichen Verfahren mittels Durchlaufband kann das Verfahren auch im Batchverfahren durchgeführt werden. Dabei werden die zu bedruckenden und gedruckten Teile manuell positioniert oder entnommen.

Insbesondere bei der Anwendung mit Siliconzusammensetzungen hat sich die Erweiterung mit einer definierten Aufladung und der zusätzlichen Anwendung elektrostatischer Felder als vorteilhaft erwiesen (EF LIFT = Electric Field Laser Induced Forward Transfer). Hier wird eine Verbesserung des Ablösens und Platzierens mit einer zusätzlichen Aufladung der Druckmasse und der Zieloberfläche erreicht. Der Einsatz von EF LIFT ist beispielsweise in WO2020156632 A1 beschrieben.

Besonders bevorzugt wird daher vor Schritt (b) die auf den Trägerzylinder aufgetragenen Druckmasse auf ein Potential Phi_1 aufgeladen, und die Platte auf ein Potential Phi_3 aufgeladen, wobei Phi_1 und Phi_3 entgegengesetzte Polaritäten aufweisen. Nachfolgend wird anstelle von Phi auch das Zeichen ϕ verwendet.

In einer weiteren Ausführungsform wird zusätzlich die Oberfläche des Fremdbauteils, der zuvor aufgebrachten Druckmassenschicht und/oder ggf. des Durchlaufbands auf ein Potential Phi_2 aufgeladen, wobei Phi_2 und Phi_1 entgegengesetzte Polaritäten aufweisen und Phi_2 so gewählt wird, dass wenigstens ein Teil der Ladungsmenge der in Schritt (b) transferierten Druckmasse auf der zu bedruckenden Oberfläche neutralisiert wird.

Die Platte ist vorzugsweise eine bewegliche Vakuumplatte, die das Durchlaufband in Schritt (b) in einem bestimmten Abstand zum beschichteten Trägerzylinder fixiert.

Die zu bedruckende Oberfläche der Platte, des Durchlaufbands, des Fremdbauteils und/oder der zuvor aufgebrachten Druckmassenschicht wird vorzugsweise durch ein Vorentlademodul vor Schritt (b) und gegebenenfalls vor Aufladung auf das Potential Phi_2 oder Phi_3 elektrostatisch entladen.

Die 3D-Druckvorrichtung umfasst daher vorzugsweise wenigstens ein Lade-/Entlademodul, das dazu eingerichtet ist, die auf den Trägerzylinder aufgetragenen Druckmasse, die Oberfläche der Platte und/oder die zu bedruckende Zieloberfläche (wie z.B. das Durchlaufband) jeweils unabhängig voneinander auf ein bestimmtes Potential Phi aufzuladen.

Unter dem Begriff "aufladen" wird im Rahmen der vorliegenden Erfindung die Erhöhung oder Erniedrigung des Potentials verstanden. Dies umfasst auch die Aufladung bzw. Entladung auf ein Potential 0 V.

Entsprechende Ionisationssysteme, insbesondere für Siliconzusammensetzungen, sind beispielsweise in WO2018072809 A1 beschrieben.

Bevorzugt dreht sich der Trägerzylinder, wobei in Schritt (a) durch ein Auftragesystem eine Schicht mit Druckmasse auf den sich drehenden Trägerzylinder aufgetragen wird und nach Schritt (b) nicht abgelöste Druckmasse durch ein Abtragesystem vom sich drehenden Trägerzylinder entfernt wird.

Vorzugsweise umfasst die 3D-Druckvorrichtung wenigstens ein Abtragesystem, das dazu eingerichtet nicht abgelöste Druckmasse vom Trägerzylinder (51) zu entfernen.

Auf- und Abtragesysteme für Walzen sind dem Fachmann aus den Bereichen Offsetdruck und Tiefdruck bekannt. Solche Systeme sind beispielsweise bei der Heidelberger Druckmaschinen AG kommerziell erhältlich, Deutschland.

In einer alternativen Ausführungsform wird der Trägerzylinder manuell beschichtet. bevorzugt ist jedoch die automatisierte Beschichtung.

In einer besonderen Ausführungsform der 3D-Druckvorrichtung sind der Trägerzylinder (51), das Auftragesystem (52), das Abtragesystem (53) und/oder der Bauraum der 3D-Druckvorrichtung beheizbar und/oder kühlbar ausgestaltet.

Vorzugsweise wird die durch das Abtragesystem (53) entfernte Druckmasse zur Beschichtung des Trägerzylinders in Schritt (a) wiederverwendet.

Vorzugsweise wird die durch das Abtragesystem (53) entfernte Druckmasse vor der Wiederverwendung durch wenigstens eine Aufarbeitungseinheit (64) aufgearbeitet, wobei die Aufarbeitung ein oder mehrere der folgenden Schritte umfasst: Zerkleinerung, Filterung, Entgasung, Befeuchtung, Entfeuchtung, Beimengung von Additiven, und Messung der physikalischen und/oder chemischen Eigenschaften der Druckmasse.

Vorzugsweise umfasst die 3D-Druckvorrichtung daher wenigstens eine Aufarbeitungseinheit (64), die dazu eingerichtet ist, die vom Abtragesystem (53) entfernte Druckmasse (54) zur Wiederverwendung aufzuarbeiten.

Für den Fall, dass die Druckmasse zwei oder mehrere Komponenten umfasst, wird jede Komponente vor Schritt (a) vorzugsweise aus einer Dosiereinheit (61, 62) in ein oder mehrere Mischsysteme (63, 67) zugeführt.

Dem Mischsystem (63, 67) wird vorzugsweise vom Abtragesystem (53) entfernte Druckmasse (54) zugemischt.

Die Art und Zusammensetzung der Druckmasse sind keinen besonderen Beschränkungen unterworfen.

Vorzugsweise enthält die Druckmasse weniger als 5 Gew.-%, besonders bevorzugt weniger als 1 Gew.-%, insbesondere bevorzugt weniger als 0,5 Gew.-%, ganz besonders bevorzugt weniger als 0,1 Gew.-% Lösungsmittel, basierend auf der Gesamtmasse der Druckmasse.

Geeignete Lösungsmittel sind im Stand der Technik bekannt und im Handel erhältlich. Das Lösungsmittel ist abhängig von der chemischen Zusammensetzung der Druckmasse zu wählen. Das Lösungsmittel kann beispielsweise Wasser oder eine wässrige Lösung sein. Alternativ kann das Lösungsmittel beispielsweise ein organisches Lösungsmittel sein. Bevorzugt ist ein organisches Lösungsmittel mit 3 bis 20 Kohlenstoffatomen. Zu den Beispielen für Lösungsmittel gehören aliphatische Kohlenwasserstoffe wie beispielsweise Nonan, Decalin und Dodecan; aromatische Kohlenwasserstoffe wie beispielsweise Mesitylen, Xylen und Toluen; Ester wie beispielsweise Ethylacetat und Butyrolacton; Ether wie beispielsweise n-Butylether und Polyethylenglycolmonomethylether; Ketone wie beispielsweise Methylisobutylketon und Methylpentylketon; und Kombinationen aus den vorgenannten Lösungsmitteln.

Als Druckmassen eignen sich beispielsweise ein oder mehrere der folgenden objektbildenden Materialien: Silicone, Polyacrylate, Polyolefine, Polyurethane, Polyharnstoffe, Polynitrile, Polyester, Polyether, Polylactide, Polyhdroxyalkanoate, sowie Mischungen, Lösungen, Dispersionen oder Copolymeren umfassend eines oder mehrere der vorgenannten objektbildenden Materialien. Bevorzugt werden Siliconzusammensetzungen eingesetzt.

Besonders bevorzugt wird wenigstes eine Druckmasse aus der Gruppe bestehend aus vernetzbaren Siliconelastomerzusammensetzungen, Silicongelen, Siliconharzen, Siliconölen und Silicondispersionen ausgewählt.

Zusätzlich können ein oder mehrere Stützmaterialien als Druckmasse eingesetzt werden, die nach Aufbau des Objekts wieder entfernt werden.

Als objektbildende Druckmaterialien können prinzipiell alle im Stand der Technik bekannten Siliconzusammensetzungen verwendet werden. Die Siliconzusammensetzung wird dabei vorzugsweise so gewählt, dass deren Vernetzung nicht bereits durch Bestrahlung mit dem beim Lasertransferdruck eingesetzten Lasers ausgelöst wird.

Es können beispielsweise additionsvernetzende, peroxidisch vernetzende, kondensationsvernetzende oder strahlenvernetzende Siliconelastomerzusammensetzungen verwendet werden. Bevorzugt sind peroxidisch oder additionsvernetzende Zusammensetzungen. Besonders bevorzugt sind additionsvernetzende Zusammensetzungen.

Die Siliconelastomerzusammensetzungen können ein- oder zweikomponentig formuliert sein. Die Vernetzung der Siliconelastomerzusammensetzungen erfolgt dabei durch Wärmezufuhr, UV-Licht und/oder Feuchtigkeit. Geeignet sind beispielsweise folgende Siliconelastomerzusammensetzungen: HTV (additionsvernetzend), HTV (strahlenvernetzend), LSR, RTV 2 (additionsvernetzend), RTV 2 (kondensations-vernetzend), RTV 1, TPSE (thermoplastisches Siliconelastomer), Thiol-En und Cyanacetamid vernetzende Systeme.

Die additionsvernetzenden Siliconzusammensetzungen enthalten im einfachsten Fall
(A) mindestens eine lineare Verbindung, die Reste mit aliphatischen Kohlenstoff-Kohlenstoff-Mehrfachbindungen aufweist,
(B) mindestens eine lineare Organopolysiloxan Verbindung mit Si-gebundenen Wasserstoffatomen,
   oder anstelle von (A) und (B) oder zusätzlich zu (A) und (B)
(C) mindestens eine lineare Organopolysiloxan-Verbindung, die Si-C-gebundene Reste mit aliphatischen Kohlenstoff-Kohlenstoff Mehrfachbindungen und Si-gebundene Wasserstoffatome aufweist, und
(D) mindestens einen Hydrosilylierungskatalysator.

In einer besonderen Ausführungsform handelt es sich bei den Siliconzusammensetzungen um Siliconelastomerzusammensetzungen mit fluorierten Seitengruppen, wie sie beispielsweise in WO2018177523 A1 beschrieben sind. In dieser Ausführungsform enthalten Komponente (A), (B) und/oder (C) vorzugsweise wenigstens 2,5 mol%, besonders bevorzugt wenigstens 5 mol% fluorierte Seitengruppen, wie beispielweise 3,3,3-Trifluorpropylmethylsiloxy- und/oder Bis(3,3,3-Trifluorpropyl)siloxy-Gruppen.

Bei den Siliconzusammensetzungen kann es sich um Einkomponenten-Siliconzusammensetzungen wie auch um Zweikomponenten-Siliconzusammensetzungen handeln. In letzterem Fall können die beiden Komponenten der Zusammensetzungen alle Bestandteile in beliebiger Kombination enthalten, im Allgemeinen mit der Maßgabe, dass eine Komponente nicht gleichzeitig Siloxane mit aliphatischer Mehrfachbindung, Siloxane mit Si-gebundenem Wasserstoff und Katalysator, also im Wesentlichen nicht gleichzeitig die Bestandteile (A), (B) und (D) bzw. (C) und (D) enthält.

Die in den Zusammensetzungen eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den oben genannten Verhältnissen aufweist. Auch möglich sind Mischungen aus (A) und (B) und (C) mit den oben genannten Verhältnissen von aliphatisch ungesättigten Resten und Si-gebundenen Wasserstoffatomen.

Bei der eingesetzten Verbindung (A) kann es sich um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln oder auch um deren Mischungen.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisoproppenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenylhexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propantrimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykoldiacrylat, Polyethylenglykol Dimethacrylat, Poly(propylenglykol)methacrylat.

Vorzugsweise enthalten die Siliconzusammensetzungen als Bestandteil (A) mindestens eine aliphatisch ungesättigte Organosiliciumverbindung, wobei alle bisher in additionsvernetzenden Zusammensetzungen verwendeten, aliphatisch ungesättigten Organosiliciumverbindungen eingesetzt werden können, wie beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindungen (A), die Si-C-gebundene Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel (I)

R⁴ₐR⁵_{b}SiO_{(4-a-b)/2} (I)

eingesetzt, wobei
R⁴ unabhängig voneinander, gleich oder verschieden, ein von aliphatischen Kohlenstoff-Kohlenstoff-Mehrfachbindungen freien, organischen oder anorganischen Rest,
R⁵ unabhängig voneinander, gleich oder verschieden einen einwertigen, substituierten oder nicht substituierten, Si-C-gebundenen Kohlenwasserstoffrest mit mindestens einer aliphatischen Kohlenstoff-Kohlenstoff-Mehrfachbindung,
a = 0, 1, 2 oder 3 ist, und
b = 0, 1 oder 2 ist
bedeuten, mit der Maßgabe, dass die Summe a + b kleiner oder gleich 3 ist und mindestens 2 Reste R⁵ je Molekül vorliegen.

Bei Rest R⁴ kann es sich um ein- oder mehrwertige Reste handeln, wobei die mehrwertigen Reste, wie beispielsweise bivalente, trivalente und tetravalente Reste, dann mehrere, wie etwa zwei, drei oder vier, Siloxy-Einheiten der Formel (I) miteinander verbinden.

Weitere Beispiele für R⁴ sind die einwertigen Reste -F, -Cl, -Br,-OR⁶, -CN, -SCN, - NCO und Si-C-gebundene, substituierte oder nicht substituierte Kohlenwasserstoffreste, die mit Sauerstoffatomen oder der Gruppe -C(O)-unterbrochen sein können, sowie zweiwertige, beidseitig gemäß Formel (I) Si-gebundene Reste. Falls es sich bei Rest R⁴ um Si-C-gebundene, substituierte Kohlenwasserstoffreste handelt, sind bevorzugte Substituenten Halogenatome, phosphorhaltige Reste, Cyanoreste, -OR⁶, -NR⁶-, -NR⁶₂, -NR⁶-C(O)-NR⁶₂, -C(O)-NR⁶₂, -C(O)R⁶, -C(O)OR⁶, -SO₂-Ph und -C₆F₅. Dabei bedeuten R⁶ unabhängig voneinander, gleich oder verschieden ein Wasserstoffatom oder einen einwertigen Kohlenwasserstoffrest mit 1 bis 20 Kohlenstoffatomen und Ph gleich dem Phenylrest.

Beispiele für Reste R⁴ sind Alkylreste, wie der Methyl-, Ethyl-, n-Propyl-, iso-Propyl-, n-Butyl-, iso-Butyl-, tert-Butyl-, n-Pentyl-, iso-Pentyl-, neo-Pentyl-, tert-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste R⁴ sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)-N(R⁶)C(O)NR⁶₂, - (CH₂)ₙ-C(O)NR⁶₂, -(CH₂)ₒ-C(O)R⁶, -(CH₂)ₒ-C(O)OR⁶, -(CH₂)ₒ-C(O)NR⁶₂, -(CH₂)-C(O)-(CH₂)ₚC(O)CH₃, -(CH₂)-O-CO-R⁶, -(CH₂)-NR⁶-(CH₂)_{P}-NR⁶₂, -(CH₂)ₒ-O-(CH₂)ₚCH (OH) CH₂OH, -(CH₂)ₒ(OCH₂CH₂)ₚOR⁶, -(CH₂)ₒ-SO₂-Ph und -(CH₂)ₒ-O-C₆F₅, wobei R⁶ und Ph der oben dafür angegebene Bedeutung entsprechen und o und p gleiche oder verschiedene ganze Zahlen zwischen 0 und 10 bedeuten.

Beispiele für R⁴ gleich zweiwertige, beidseitig gemäß Formel (I) Si-gebundene Reste sind solche, die sich von den voranstehend für Rest R⁴ genannten einwertigen Beispiele dadurch ableiten, dass eine zusätzliche Bindung durch Substitution eines Wasserstoffatoms erfolgt, Beispiele für derartige Reste sind -(CH₂)-, -CH(CH₃)-, - C(CH₃)₂-, -CH(CH₃)-CH₂-, -C₆H₄-, -CH(Ph)-CH₂-, -C(CF₃)₂-, -(CH₂)ₒ-C₆H₄-(CH₂)ₒ-, - (CH₂)ₒ-C₆H₄-C₆H₄-(CH₂)ₒ-, -(CH₂O)ₚ, (CH₂CH₂O)ₒ, -(CH₂)ₒ-Oₓ-C₆H₄-SO₂-C₆H₄-Oₓ-(CH₂)ₒ-, wobei x 0 oder 1 ist, und Ph, o und p die voranstehend genannte Bedeutung haben.

Bevorzugt handelt es sich bei Rest R⁴ um einen einwertigen, von aliphatischen Kohlenstoff-Kohlenstoff-Mehrfachbindungen freien, Si-C-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, Si-C-gebundenen Kohlenwasserstoffrest mit 1 bis 6 Kohlenstoffatomen, insbesondere um den Methyl- oder Phenylrest.

Bei Rest R⁵ aus Formel (I) kann es sich um beliebige, einer Anlagerungsreaktion (Hydrosilylierung) mit einer SiH-funktionellen Verbindung zugängliche Gruppen handeln.

Falls es sich bei Rest R⁵ um Si-C-gebundene, substituierte Kohlenwasserstoffreste handelt, sind als Substituenten Halogenatome, Cyanoreste und -OR⁶ bevorzugt, wobei R⁶ die obengenannte Bedeutung hat.

Bevorzugt handelt es sich bei Rest R⁵ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R⁴₃SiO_{1/2}, R⁵R⁴₂SiO_{1/2}, R⁵R⁴SiO_{1/2} und R⁴₂SiO_{2/2} zusammengesetzt, wobei R⁴ und R⁵ die vorstehend angegebene Bedeutung haben. Verzweigte und netzwerkartige Polysiloxane enthalten zusätzlich trifunktionelle und/oder tetrafunktionelle Einheiten, wobei solche der Formeln R⁴SiO_{3/2}, R⁵SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500.000 Pa s, besonders bevorzugt von 0,1 bis 100.000 Pa s, jeweils bei 25°C, gemessen nach DIN EN ISO 3219: 1994 und DIN 53019 mittels eines kalibrierten Rheometers mit einem Kegel-Platte-System, Kegel CP50-2 mit einem Öffnungswinkel von 2° und einer Scherrate von 1 s⁻¹.

Als Organosiliciumverbindungen (B) können alle hydrogenfunktionellen Organosiliciumverbindungen eingesetzt werden, die auch bisher in additionsvernetzbaren Zusammensetzungen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der allgemeinen Formel (III)

R⁴_{c}H_{d}SiO_{(4-c-d)/2} (III)

eingesetzt, wobei
R⁴ die oben angegebene Bedeutung hat,
c = 0, 1, 2 oder 3 ist und
d = 0, 1 oder 2 ist,
mit der Maßgabe, dass die Summe von c + d kleiner oder gleich 3 ist und mindestens zwei Si gebundene Wasserstoffatome je Molekül vorliegen.

Vorzugsweise enthält das eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständig oder endständig SiH-Gruppen verfügendes hochpolymeres Polydimethylsiloxan oder ein SiH-Gruppen aufweisendes Siliconharz.

Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane (B) sind vorzugsweise aus Einheiten der Formel R⁴₃SiO_{1/2}, HR⁴₂SiO_{1/2}, HR⁴SiO_{2/2} und R⁴₂SiO_{2/2} zusammengesetzt, wobei R⁴ die vorstehend angegebene Bedeutung hat. Verzweigte und netzwerkartige Polysiloxane enthalten zusätzlich trifunktionelle und/oder tetrafunktionelle Einheiten, wobei solche der Formeln R⁴SiO_{3/2}, HSiO_{3/2} und SiO_{4/2} bevorzugt sind, wobei R⁴ die vorstehend angegebene Bedeutung hat.

Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiH-funktioneller Verbindungen wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 20.000 mPa s, gemessen nach DIN EN ISO 3219: 1994 und DIN 53019 mittels eines kalibrierten Rheometers mit einem Kegel-Platte-System, Kegel CP50-2 mit einem Öffnungswinkel von 2° und einer Scherrate von 1 s⁻¹, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den vernetzbaren Siliconzusammensetzungen enthalten, dass das Molverhältnis von SiH-Gruppen zu aliphatisch ungesättigten Gruppen aus (A) bei 0,1 bis 20, besonders bevorzugt zwischen 0,3 und 2,0 liegt.

Die eingesetzten Komponenten (A) und (B) sind handelsübliche Produkte bzw. nach gängigen Verfahren herstellbar.

Anstelle von Komponente (A) und (B) können die Siliconzusammensetzungen Organopolysiloxane (C), die gleichzeitig aliphatische Kohlenstoff-Kohlenstoff-Mehrfachbindungen und Si-gebundene Wasserstoffatome aufweisen, enthalten. Auch können die Siliconzusammensetzungen alle drei Komponenten (A), (B) und (C) enthalten.

Falls Siloxane (C) eingesetzt werden, handelt es sich vorzugsweise um solche aus Einheiten der allgemeinen Formeln (IV), (V) und (VI)

R⁴_{f}SiO_{4/2} (IV)

R⁴_{g}R⁵SiO_{3-g/2} (V)

R⁴ₕHSiO_{3-h/2} (VI)

wobei
R⁴ und R⁵ die oben dafür angegebene Bedeutung haben
f = 0, 1, 2 oder 3 ist,
g = 0, 1 oder 2 ist und
h =0, 1 oder 2 ist,
mit der Maßgabe, dass je Molekül mindestens zwei Reste R⁵ und mindestens zwei Si-gebundene Wasserstoffatome vorliegen.

Beispiele für Organopolysiloxane (C) sind solche aus SO_{4/2}, R⁴₃SiO_{1/2}-, R⁴₂R⁵SiO_{1/2}- und R⁴₂HSiO_{1/2}- Einheiten, sogenannte MP-Harze, wobei diese Harze zusätzlich R⁴SiO_{3/2}- und R⁴₂SiO-Einheiten enthalten können, sowie lineare Organopolysiloxane im Wesentlichen bestehend aus R⁴₂R⁵SiO_{1/2}-, R⁴₂SiO- und R⁴HSiO-Einheiten mit R⁴ und R⁵ gleich der obengenannten Bedeutung.

Die Organopolysiloxane (C) besitzen vorzugsweise eine durchschnittliche Viskosität von 0,01 bis 500.000 Pa s, besonders bevorzugt 0,1 bis 100.000 Pa s jeweils bei 25°C, gemessen nach DIN EN ISO 3219: 1994 und DIN 53019 mittels eines kalibrierten Rheometers mit einem Kegel-Platte-System, Kegel CP50-2 mit einem Öffnungswinkel von 2° und einer Scherrate von 1 s⁻¹..

Organopolysiloxane (C) sind kommerziell erhältlich oder nach gängigen Methoden herstellbar.

Additionsvernetzende Siliconzusammensetzungen, können ausgewählt werden aus der Gruppe enthaltend
- jeweils mindestens eine Verbindung (A), (B) und (D),
- jeweils mindestens eine Verbindung (C) und (D), und
- jeweils mindestens eine Verbindung (A), (B), (C) und (D),
wobei
(A) eine organische Verbindung oder eine Siliciumorganische Verbindung, enthaltend mindestens zwei Reste mit aliphatischen Kohlenstoff-Kohlenstoff-Mehrfachbindungen,
(B) ein Siliciumorganische Verbindung, enthaltend mindestens zwei Si-gebundenen Wasserstoffatome,
(C) eine Siliciumorganische Verbindung, enthaltend Si-C-gebundene Reste mit aliphatischen Kohlenstoff-Kohlenstoff-Mehrfachbindungen und Si- gebundene Wasserstoffatome, und
(D) ein Hydrosilylierungskatalysator
bedeuten.

Die Siliconzusammensetzung enthält üblicherweise 30-95 Gew.%, bevorzugt 30-80 Gew.% und besonders bevorzugt 40-70 Gew.% (A), basierend auf der Gesamtmasse der Siliconzusammensetzung.

Die Siliconzusammensetzung enthält üblicherweise 0,1 - 60 Gew.%, bevorzugt 0,5-50 Gew.% und besonders bevorzugt 1-30 Gew.% (B), basierend auf der Gesamtmasse der Siliconzusammensetzung.

Falls die Siliconzusammensetzung die Komponente (C) enthält, sind üblicherweise 30-95 Gew.%, bevorzugt 30-80 Gew.%, besonders bevorzugt 40-70 Gew.% (C) in der Formulierung enthalten, basierend auf der Gesamtmasse der Siliconzusammensetzung.

Die Menge an Komponente (D) kann zwischen 0,1 und 1000 Teile pro Million (ppm), 0,5 und 100 ppm oder 1 und 25 ppm des Platingruppenmetalls betragen, je nach Gesamtgewicht der Komponenten.

Die Mengen aller in der Siliconzusammensetzung vorliegenden Komponenten werden dabei so gewählt, dass sie in der Summe 100 Gew.%, basierend auf der Gesamtmasse der Siliconzusammensetzung, nicht überschreiten.

Als Hydrosilylierungskatalysator (D) können alle dem Stand der Technik bekannten Katalysatoren verwendet werden können. Komponente (D) kann ein Platingruppenmetall sein, beispielsweise Platin, Rhodium, Ruthenium, Palladium, Osmium oder Iridium, eine metallorganische Verbindung oder eine Kombination davon. Beispiele für Komponente (D) sind Verbindungen wie Hexachloroplatin(IV)-säure, Platindichlorid, Platinacetylacetonat und Komplexe der besagten Verbindungen, die in einer Matrix oder einer kernschalenartigen Struktur eingekapselt sind. Zu den Platinkomplexen mit niedrigem Molekulargewicht der Organopolysiloxane gehören 1,3-Diethenyl-1,1,3,3 - Tetramethyldisiloxan-Komplexe mit Platin. Weitere Beispiele sind Platinphosphitkomplexe, Platinphosphinkomplexe oder Alkylplatinkomplexe. Diese Verbindungen können in einer Harzmatrix eingekapselt sein.

Die Konzentration von Komponente (D) ist zum Katalysieren der Hydrosilylierungsreaktion der Komponenten (A) und (B) bei Einwirkung ausreichend, um die hier in dem beschriebenen Verfahren erforderliche Wärme zu erzeugen. Die Menge an Komponente (D) kann zwischen 0,1 und 1000 Teile pro Million (ppm), 0,5 und 100 ppm oder 1 und 25 ppm des Platingruppenmetalls betragen, je nach Gesamtgewicht der Komponenten. Die Härtungsrate kann gering sein, wenn der Bestandteil des Platingruppenmetalls bei unter 1 ppm liegt. Die Verwendung von mehr als 100 ppm des Platingruppenmetalls ist unwirtschaftlich oder kann die Stabilität der Kleberformulierung verringern.

Bevorzugt enthält die Siliconzusammensetzung Platinkomplexe der allgemeinen Formel (VII)

R³₃Pt{CpR⁴₅₋ᵣ₋ₜ[(CR₂)ₙSiR¹ₒR²ₚ]ₜ[SiR⁷ₛR⁸₃₋ₛ]ᵣ} (VII),

wobei in Formel (VII)
**Cp** Cyclopentadienylrest bedeutet,
**n** eine ganze Zahl von 1 bis 8 ist,
**o** 0, 1, 2 oder 3 ist,
**p** 0, 1, 2 oder 3 ist, mit der Maßgabe, dass **o+p=3** ist,
**r** 1, 2, 3, 4 oder 5, bevorzugt 1, 2 oder 3, besonders bevorzugt 1 oder 2, insbesondere 1, ist,
**t** 0, 1, 2, 3 oder 4, bevorzugt 0 oder 1, besonders bevorzugt 1, ist, mit der Maßgabe, dass **r+t≤5,** bevorzugt 3, ist,
**s** 0, 1 oder 2, bevorzugt 2, ist,
**R** gleich oder verschieden sein kann und Wasserstoffatom oder einen monovalenten, unsubstituierten oder substituierten Kohlenwasserstoffrest bedeutet,
**R¹** gleich oder verschieden sein kann und einen monovalenten, unsubstituierten oder substituierten Kohlenwasserstoffrest, der durch Heteroatome unterbrochen sein kann, bedeutet,
**R²** gleich oder verschieden sein kann und hydrolysierbare Gruppe oder einen über Sauerstoff angebundenen Siloxyrest bedeutet,
**R⁷** gleich oder verschieden sein kann und einen monovalenten, unsubstituierten oder substituierten, aliphatisch gesättigten Kohlenwasserstoffrest, der durch Heteroatome unterbrochen sein kann, oder einen über Sauerstoff angebundenen Siloxyrest bedeutet,
**R⁸** gleich oder verschieden sein kann und einen aliphatisch ungesättigten, gegebenenfalls substituierten Rest darstellt,
**R³** gleich oder verschieden sein kann und einen monovalenten, unsubstituierten oder substituierten aliphatisch gesättigten Kohlenwasserstoffrest bedeutet,
**R⁴** gleich oder verschieden sein kann, Wasserstoffatom, SiC-gebundener Silylrest oder einen unsubstituierten oder substituierten Kohlenwasserstoffrest bedeutet, der durch Heteroatome unterbrochen sein kann.

Beispiele für solche Platinkomplexe der Formel (VII) sind Trimethyl[(allyldimethylsilyl)cyclopentadienyl]-platin(IV), Trimethyl[((2-methyl-allyl)dimethylsilyl)cyclopentadienyl]-platin(IV), Trimethyl[(trimethoxysilyl)methyl-(allyldimethylsilyl)cyclopentadienyl]-platin(IV), Trimethyl[(2-trimethoxysilyl)ethyl-(allyldimethylsilyl)cyclopentadienyl]-platin(IV), Trimethyl[(3-trimethoxysilyl)propyl-(allyldimethylsilyl)cyclopentadienyl]-platin(IV), Trimethyl[(3-dimethoxymethylsilyl)propyl-(allyldimethylsilyl)cyclopentadienyl]-platin(IV), Trimethyl[(4-trimethoxysilyl)butyl-(allyldimethylsilyl)cyclopentadienyl]-platin(IV), Trimethyl[(2-trimethoxysilyl)-1-methyl-ethyl-(allyldimethylsilyl)cyclopentadienyl]-platin(IV), Trimethyl[(3-trimethoxysilyl)-2-methyl-2-propyl-(allyldimethylsilyl)cyclopentadienyl]-platin(IV), Trimethyl[bis(allyldimethylsilyl)cyclopentadienyl]-platin(IV), Trimethyl[bis(2-methyl-allyldimethylsilyl)cyclopentadienyl]-platin(IV), Trimethyl[(trimethoxysilyl)methyl-bis(allyldimethylsilyl)cyclopentadienyl]-platin(IV), Trimethyl[(2-trimethoxysilyl)ethyl-bis(allyldimethylsilyl)cyclopentadienyl]-platin(IV), Trimethyl[(3-trimethoxysilyl)propyl-bis(allyldimethylsilyl)cyclopentadienyl]-platin(IV), Trimethyl[(4-trimethoxysilyl)butyl- bis(allyldimethylsilyl)cyclopentadienyl]-platin(IV), Trimethyl[(2-trimethoxysilyl)-1-methyl-ethyl-bis(allyldimethylsilyl)cyclopentadienyl]-platin(IV), Trimethyl[(3-trimethoxysilyl)-2-methyl-2-propyl-bis(allyldimethylsilyl)cyclopentadienyl]-platin(IV), Trimethyl[tris(allyldimethylsilyl)cyclopentadienyl]-platin(IV), Trimethyl[(triethoxysilyl)methyl-(allyldimethylsilyl)cyclopentadienyl]-platin(IV), Trimethyl[(triacetoxysilyl)methyl-(allyldimethylsilyl)cyclopentadienyl]-platin(IV), Trimethyl[(3-bis-trimethylsiloxy)methylsilylpropyl](allyldimethylsilyl) cyclopentadienyl-platin(IV), Trimethyl[(3-triethoxysilyl)propyl-(allyldimethylsilyl)cyclopentadienyl]-platin(IV), Trimethyl[(triethoxysilyl)methyl-bis(allyldimethylsilyl)cyclopentadienyl]-platin(IV), Trimethyl[(3-triethoxysilyl)propyl-bis(allyldimethylsilyl)cyclopentadienyl]-platin(IV), Trimethyl[(triethoxysilyl)methyl-tris(allyldimethylsilyl)cyclopentadienyl]-platin(IV), Triethyl[(allyldimethylsilyl)cyclopentadienyl]-platin(IV), Tris(trimethylsilylmethyl)[(allyldimethylsilyl)cyclopentadienyl]-platin(IV), Triethyl[(trimethoxysilyl)methyl-(allyldimethylsilyl)cyclopentadienyl]-platin(IV), Triethyl[(trimethoxysilyl)methyl-bis(allyldimethylsilyl)cyclopentadienyl]-platin(IV), Triethyl[tris(allyldimethylsilyl)cyclopentadienyl]-platin(IV) und Triethyl[(trimethoxysilyl)methyl-tris(allyldimethylsilyl)cyclopentadienyl]-platin(IV). Diese Platinkomplexe sind beispielsweise in WO2016030325 A1 beschrieben.

In einer weiteren Ausführungsform handelt es sich bei den Siliconzusammensetzungen um peroxidisch vernetzbare Siliconmassen. Diese Siliconmassen können durch die Zugabe organischer Peroxide (als Komponente D) organisch vernetzt werden. In diesem Fall besteht die Siliconzusammensetzung mindestens aus den Komponenten (A) und (D). Dabei sind bevorzugt zwischen 0,1 und 20 Gew.-% Komponente (D) in den Siliconkautschukmassen enthalten. Als Vernetzer im Sinne der Komponente (D) können alle dem Stand der Technik entsprechenden und typischen Peroxide verwendet werden. Beispiele für die Komponente (D) sind Dialkylperoxide, wie 2,5-Dimethyl-2,5-di(tert-butylperoxy)hexan, 1,1-Di-(tertbutylperoxy)-cyclohexan, 1,1-Di-(tert -butylperoxy)-3,3,5-trimethylcyclohexan, α-Hydroxyperoxy-α' -hydroxydicyclohexylperoxid, 3,6-Dicyclohexyliden-1 ,2,4,5-tetroxan, Di-tert-butylperoxid, tert-Butyl-tert-triptylperoxid und tert-Butyl-triethyl- 5-methylperoxid, Diaralkylperoxide, wie Dicumylperoxid, Alkylaralkylperoxide, wie tert-Butylcumylperoxid und α,α'-di(tert- Butylperoxy)-m/p-diisopropylbenzol, Alkylacylperoxide, wie t-Butylperbenzoat, und Diacylperoxide, wie Dibenzoylperoxid, Bis-(2-methylbenzoylperoxid), Bis-(4-methylbenzoylperoxid) und Bis-(2,4-dichlorbenzoylperoxid). Bevorzugt ist die Verwendung vinylspezifischer Peroxide, deren wichtigste Vertreter die Dialkyl- und Diaralkylperoxide sind.

Besonders bevorzugt ist die Verwendung von 2,5-Dimethyl-2,5-di(tert-butylperoxy)hexan und Dicumylperoxid. Es können einzelne Peroxide oder Mischungen unterschiedlicher Peroxide eingesetzt werden. Der Gehalt der peroxidisch vernetzbaren Siliconkautschukmasse an Bestandteil (D) liegt vorzugsweise zwischen 0,1 und 5,0 Gew.-%, besonders bevorzugt zwischen 0,5 und 1,5 Gew.-%. Bevorzugt sind somit die vernetzbaren Siliconkautschukmassen, dadurch gekennzeichnet, dass der Vernetzer (D) von 0,1 bis 5,0 Gew.-% enthalten ist und ein organisches Peroxid oder eine Mischung aus organischen Peroxiden darstellt, jeweils basierend auf der Gesamtmasse der Siliconzusammensetzung.

Die beschriebenen Massen können optional alle weiteren Zusatzstoffe enthalten, die auch bisher zur Herstellung von peroxid- und additionsvernetzbaren Zusammensetzungen eingesetzt wurden.

Diese Zusatzstoffe können auch allen im Stand der Technik bekannten kondensationsvernetzenden Siliconelastomerzusammensetzungen zugesetzt werden. Eine nähere Beschreibung der Vernetzungsart ist beispielsweise in EP0787766 A1 angegeben.

Zu den Beispielen für optionale Komponenten gehören unter anderem (E) Füllstoffe.

Beispiele für verstärkende Füllstoffe, die als Komponente in den Siliconzusammensetzungen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind. Die genannten Kieselsäurefüllstoffe können hydrophilen Charakter haben oder nach bekannten Verfahren hydrophobiert sein. Der Gehalt der vernetzbaren Zusammensetzung an aktiv verstärkendem Füllstoff liegt im Bereich von 0 bis 70 Gew.-%, vorzugsweise bei 0 bis 50 Gew.-%, basierend auf der Gesamtmasse der Siliconzusammensetzung.

Besonders bevorzugt sind die vernetzbaren Siliconkautschukmassen dadurch gekennzeichnet, dass der Füllstoff (E) oberflächenbehandelt ist. Die Oberflächenbehandlung wird durch dem Stand der Technik bekannten Verfahren zur Hydrophobierung feinteiliger Füllstoffe erzielt. Die Hydrophobierung kann beispielsweise entweder vor der Einarbeitung in das Polyorganosiloxan erfolgen oder auch in Gegenwart eines Polyorganosiloxans nach dem in-situ Verfahren. Beide Verfahren können sowohl im Batch-Prozess als auch kontinuierlich durchgeführt werden. Bevorzugt verwendete Hydrophobierungsmittel sind siliciumorganische Verbindungen, die mit der Füllstoffoberfläche unter Ausbildung kovalenter Bindungen zu reagieren vermögen oder dauerhaft an der Füllstoffoberfläche physisorbiert werden. Beispiele für Hydrophobierungsmittel sind Alkylchlorsilane, wie Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethylchlorsilan, Octadecyldimethylchlorsilan und tert.-Butyldimethylchlorsilan; Alkylalkoxysilane, wie Dimethyldimethoxysilan, Dimethyldiethoxysilan, Trimethylmethoxysilan und Trimethylethoxysilan; Trimethylsilanol; zyklische Diorgano(poly)siloxane, wie Octamethylcyclotetrasiloxan, Dekamethylcyclopentasiloxan; lineare Diorganopolysiloxane, wie Dimethylpolysiloxane mit Trimethylsiloxy-Endgruppen sowie Dimethylpolysiloxane mit Silanol- oder Alkoxy-Endgruppen; Disilazane, wie Hexaalkyldisilazane, insbesondere Hexamethyldisilazan, Divinyltetramethyldisilazan, Bis(trifluorpropyl)tetramethyldisilazan; zyklische Dimethylsilazane, wie Hexamethylcyclotrisilazan. Es können auch Mischungen der weiter oben genannten Hydrophobierungsmittel eingesetzt werden. Um die Hydrophobierung zu beschleunigen, erfolgt gegebenenfalls auch der Zusatz von katalytisch aktiven Additiven, wie beispielsweise Aminen, Metallhydroxiden und Wasser.

Die Hydrophobierung kann beispielsweise in einem Schritt unter Verwendung von einem oder einer Mischung aus mehreren Hydrophobiermitteln, aber auch unter Verwendung von einem oder mehreren Hydrophobiermitteln in mehreren Schritten erfolgen.

Bevorzugte Füllstoffe (E) weisen infolge einer Oberflächenbehandlung einen Kohlenstoffgehalt von mindestens 0,01 bis maximal 20 Gew.-%, bevorzugt zwischen 0.1 und 10 Gew.-%, besonders bevorzugt zwischen 0,5 bis 5 Gew.-% auf, basierend auf der Gesamtmasse der Siliconzusammensetzung. Besonders bevorzugt sind vernetzbare Siliconkautschukmassen die dadurch gekennzeichnet sind, dass der Füllstoff (E) eine oberflächenbehandelte Kieselsäure, aufweisend 0,01 bis 2 Gew.-% Si-gebundene, aliphatisch ungesättigte Gruppen bedeutet, basierend auf der Gesamtmasse des Füllstoffes. Beispielsweise handelt es sich bei diesen um Si-gebundene Vinylgruppen. In der Siliconkautschukmasse wird der Bestandteil (E) bevorzugt als einzelne oder ebenfalls bevorzugt als eine Mischung mehrerer feinteiliger Füllstoffe verwendet.

Die Siliconzusammensetzung kann wahlweise als Bestandteile weitere Zusätze zu einem Anteil von bis zu 70 Gew.-%, vorzugsweise 0,0001 bis 40 Gew.-%, enthalten, basierend auf der Gesamtmasse der Siliconzusammensetzung. Diese Zusätze können z.B. inaktive Füllstoffe, harzartige Polyorganosiloxane, die von den Siloxanen (A), (B) und (C) verschieden sind, verstärkende und nicht verstärkende Füllstoffe, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Graphen, Metalloxide, Metallcarbonate, -sulfate, Metallsalze von Carbonsäuren, Metallstäube, Fasern, Nanofasern, wie Glasfasern, Kunststoffasern, Kunststoffpulver, Metallstäube, Farbstoffe, und Pigmente.

Diese Füllstoffe können zudem wärmeleitend oder elektrisch leitend sein. Elektrische leitende Füllstoffe können beispielsweise eingesetzt werden, um elektrisch leitende Siliconschichten herzustellen, welche wiederum als Elektrodenschicht in Sensoren, Aktoren oder anderen EAP-System dienen können. Beispiele für wärmeleitende Füllstoffe sind Aluminiumnitrid; Aluminumoxid; Bariumtitanat; Berylliumoxid; Bornitrid; Diamant; Grafit; Magnesiumoxid; partikuläres Metall wie beispielsweise Kupfer, Gold, Nickel oder Silber; Siliciumcarbid; Wolframcarbid; Zinkoxid und/oder eine Kombination davon. Wärmeleitende Füllstoffe sind im Stand der Technik bekannt und im Handel erhältlich. Zum Beispiel CB-A20S und Al-43-Me sind Aluminiumoxid-Füllstoffe in verschiedenen Partikelgrößen, die im Handel bei Showa- Denko erhältlich sind, und AA-04, AA-2 und AAI 8 sind Aluminiumoxid-Füllstoffe, die im Handel bei Sumitomo Chemical Company erhältlich sind. Silber-Füllstoffe sind im Handel bei Metalor Technologies U.S.A. Corp. of Attleboro, Massachusetts, U.S.A., erhältlich. Bornitrid-Füllstoffe sind im Handel bei Advanced Ceramics Corporation, Cleveland, Ohio, U.S.A., erhältlich.

Zu den Verstärkungsfüllstoffen gehören Silica und Kurzfasern wie beispielsweise Kevlar^{®}-Kurzfaser. Es können eine Kombination aus Füllstoffen mit verschiedenen Partikelgrößen und unterschiedlicher Partikelgrößenverteilung verwendet werden.

Die Siliconzusammensetzung kann weiterhin eine oder mehrere optionale Komponenten enthalten. Zu den Beispielen für optionale Komponenten gehören unter anderem (F) ein oder mehrere Lösungsmittel und (G) ein oder mehrere Inhibitoren.

Die Siliconzusammensetzung kann zusätzlich optional (F) ein oder mehrere Lösungsmittel enthalten. Es ist jedoch darauf zu achten, dass das Lösemittel keine nachteiligen Effekte auf das Gesamtsystem hat. Geeignete Lösungsmittel sind im Stand der Technik bekannt und im Handel erhältlich. Das Lösungsmittel kann beispielsweise ein organisches Lösungsmittel mit 3 bis 20 Kohlenstoffatomen sein. Zu den Beispielen für Lösungsmittel gehören aliphatische Kohlenwasserstoffe wie beispielsweise Nonan, Decalin und Dodecan; aromatische Kohlenwasserstoffe wie beispielsweise Mesitylen, Xylen und Toluen; Ester wie beispielsweise Ethylacetat und Butyrolacton; Ether wie beispielsweise n-Butylether und Polyethylenglycolmonomethylether; Ketone wie beispielsweise Methylisobutylketon und Methylpentylketon; Siliconfluid wie beispielsweise lineare, verzweigte und zyklische Polydimethylsiloxane und Kombinationen aus diesen Lösungsmitteln. Die optimale Konzentration eines bestimmten Lösungsmittels in einer Kleberformulierung kann durch Routineversuche leicht bestimmt werden. Je nach Gewicht der Verbindung kann die Menge des Lösungsmittels zwischen 0 und 95 Gew.-% bzw. zwischen 1 und 95 Gew.-% liegen, basierend auf dem Gesamtgewicht der Siliconzusammensetzung.

Inhibitoren (G) und Stabilisatoren dienen der gezielten Einstellung der Verarbeitungszeit, Anspringtemperatur und Vernetzungsgeschwindigkeit der Siliconzusammensetzungen. Diese Inhibitoren und Stabilisatoren sind auf dem Gebiet der additionsvernetzenden Zusammensetzungen sehr gut bekannt. Beispiele gebräuchlicher Inhibitoren sind acetylenische Alkohole, wie 1-Ethinyl-1-cyclohexanol, 2-Methyl-3-butin-2-ol und 3.5-Dimethyl-1-hexin-3-ol, 3-Methyl-1-dodecin-3-ol, Polymethylvinylcyclosiloxane wie 1,3,5,7-Tetravinyltetramethyltetracyclosiloxan niedermolekulare Siliconöle mit Methylvinyl-SiO_{1/2}-Gruppen und/oder R₂vinylSiO_{1/2}-Endgruppen, wie Divinyltetramethydisiloxan Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfurmarat, organische Hydroperoxide wie Cumolhydroperoxid, tert-Butylhydroperoxid und Pinanhydroperoxid, organische Peroxide, organische Sulfoxide organische Amine. Diamine und Amide, Phosphane und Phosphite, Nitrile, Triazole, Diaziridine und Oxime. Die Wirkung dieser Inhibitorzusätze (E) hängt von ihrer chemischen Struktur ab, so dass die Konzentration individuell bestimmt werden muss. Inhibitoren und Inhibitormischungen werden vorzugsweise in einem Mengenanteil von 0,00001 % bis 5 % bezogen auf das Gesamtgewicht der Mischung zugesetzt, bevorzugt 0,00005 bis 2 % und besonders bevorzugt 0,0001 bis 1 %.

Nach vermischen aller Komponenten der Siliconzusammensetzung liegt die dynamische Viskosität bei einer Scherrate von 1 s⁻¹ zwischen 10 mPa·s und 1.000 Pa s, bevorzugt zwischen 100 mPa·s und 100 Pa s und besonders bevorzugt zwischen 200 mPa S und 50 Pa s, gemessen nach DIN EN ISO 3219: 1994 und DIN 53019 mittels eines kalibrierten Rheometers mit einem Kegel-Platte-System, Kegel CP50-2 mit einem Öffnungswinkel von 2° bei 25°C und einer Scherrate von 1 s⁻¹. Ein geeignetes Messgerät ist beispielsweise das Rheometer Gerät MCR302 erhältlich bei der Anton Paar GmbH, Österreich (105 µm Spaltmaß).

Die vernetzbaren Siliconzusammensetzungen haben den Vorteil, dass sie in einem einfachen Verfahren unter Verwendung leicht zugänglicher Ausgangsstoffe und damit wirtschaftlich hergestellt werden können. Die vernetzbaren Zusammensetzungen haben den weiteren Vorteil, dass sie als einkomponentige Formulierung bei 25°C und Umgebungsdruck eine gute Lagerstabilität aufweisen und erst bei erhöhter Temperatur rasch vernetzen. Die Siliconzusammensetzungen haben den Vorteil, dass diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt, also extrem lange Topfzeit zeigt, und erst bei erhöhter Temperatur rasch vernetzt.

Beispiele für auf dem Markt erhältliche Siliconzusammensetzungen sind (je nach Viskosität der Materialien kann für eine bessere Verarbeitbarkeit Lösungsmittel zu gegeben werden):
Materialien der WACKER Chemie AG: ELASTOSIL^{®} P-Reihe (7010, 7600, 7613, 7161-160, 7616-195, 7618, 7619, 7622, 7623, 7624, 7628, 7629, 7630, 7633, 7636, 7642-220, 7670, 671, 7676, 7682, 7683/15, 7683/25, 7683/47, 7683/50, 7683/55, 7684/60, 7685, 7686, 7687, 7688, 7700, 7710, 7720, 7731, 7742, 7770, 7707 US, 7915, etc.), ELASTOSIL^{®} M-Reihe (4115, 4125, 4370, 4400, 4440, 4441, 4470, 4600, 4601, 4615, 4630, 4635, 4640, 4645, 4641, 4643, 4644, 4670, 4647, 4648, 4670), ELASTOSIL^{®} RT-Reihe (601, 602, 604, 607, 615, 617, 619, 620, 622, 623, 624, 625, 626, 627, 628, 629, 630, 633, 646, 670, 672, 675, 678, 685, etc.), ELASTOSIL^{®} SOLAR-Reihe (2000, 2200, 2202, 3210, etc.), ELASTOSIL^{®} LR-Reihe (3003/03, 3003/05, 3003/10, 3003/20, 3070/20, 3844/20, 3846/20, 3856/20, 3003/30, 3004/30, 3005/30, 3040/30, 3044/30, 3065/30, 3070/30, 3071/30, 3072/30, 3843/30, 3844/30, 3846/30, 3856/30, 3003/40, 3003/50, 3003/60, 3003/70, 3003/80, 3003/85, 3004/40, 3004/50, 3004/60, 3004/70, 3005/40, 3005/50, 3005/60, 3040/40, 3040/50, 3040/60, 3043/40, 3043/50, 3043/60, 3043/70, 3015/70, 3023/60, 3092/65, 3094/60, 3065/50, 3066/40, 3066/60, 3066/80, 3070/40, 3070/50, 3070/60, 3071/40, 3071/50, 3071/60, 3072/40, 3074/60, 3076/70, 3170/40, 3841/50, 3842/40, 3842/50, 3842/60, 3842/70, 3162, etc.), ELASTOSIL^{®} FLR-Reihe (3900/40, 3900/60, 3905/40, 3905/60, etc.), ELASTOSIL^{®} R-Reihe, WACKER SILGEL^{®}-Reihe (610, 611, 612, 613, 616, 619, etc.), SEMICOSIL^{®}-Reihe, POWERSIL^{®}-Reihe, LUMISIL^{®}-Reihe, GENIOMER^{®}-Reihe, SILPURAN^{®}-Reihe, DEHESIVE^{®}-Reihe.

Weiter sind zusätzlich zu den oben genannten vernetzbaren Siliconzusammensetzungen für den Auftrag von zusätzlichen Schichten nicht aushärtende Siliconzusammensetzungen wie beispielsweise Siliconöle verwendbar. Hierbei sind folgende Produkte der WACKER Chemie AG, Deutschland, einsetzbar: WACKER^{®} AK SILICONOEL Reihe, POWERSIL^{®} FLUID TR Reihe, SILFAR^{®} Reihe. Generell sind siliconbasierte PSA (Pressure Sensitive Adhesive) einsetzbar.

Auch ist bei unterschiedlichen Anwendungen eine Verwendung von nicht aushärtenden Druckmassen als Stützmaterial oder Trennschicht von Vorteil. Diese Massen lassen sich nachträglich durch Spülen und/oder erwärmen rückstandfrei vom oder aus dem Druckkörper entfernen. Eine gängige Druckmasse ist hier beispielsweise Polyethylenglycol (PEG). Geeignete Stützmassen aus Polyethern sind beispielsweise in WO2017020971 A1 und WO2018036640 A1 beschrieben.

Alternative Stützmassen können hier auch Wachse, Bienenwachs, Vaseline, Paraffine, Harze, Gelantine sowie generell jegliche thermisch schmelzbare Masse sein. Besonders bevorzugt wird hierbei Verwendung von Polyethylenglycol (PEG) oder Wachs. Geeignete Stützmasse aus Wachs sind beispielsweise in WO2018153467 A1 beschrieben.

Wie oben erwähnt, können die Vernetzungsmechanismen frei gewählt und auch kombiniert werden. In WO9300405 A1 und PCT-Anmeldung PCT/EP2020/060378 (noch unveröffentlicht) werden hierbei verschiedenen Kombinationen von UV- und Feuchtigkeitsvernetzung benannt. Die Vorteile hierbei bilden eine Vernetzung der mit UV-erreichbaren Massen und ein Nachvernetzen der abgeschatteten Massen. Diese positiven Vernetzungseffekte, können sind vorteilhaft für Druckstrategien / Druckverfahren mit UV-undurchlässigen Druckmassen sein. Hierbei kann ein Abschatten durch platzierte Bauteile und oder ein Einfließen von Druckmassen in oder um Geometrien erfolgen und eine UV-Vernetzung behindern.

Eine weitere Form der Druckmassen können wässrige Silicondispersionen sein.

Vorzugsweise werden die Platte, das Durchlaufband, das Fremdbauteil oder die zuvor aufgebrachte Druckmassenschicht durch ein oder mehrere Sensorikmodule vor Schritt (b) erfasst werden.

Auch die bedruckte Platte, das bedruckte Durchlaufband und/oder das bedruckte Fremdbauteil werden bevorzugt durch ein oder mehrere Sensorikmodule nach Schritt (b) und/oder Schritt (c) erfasst werden.

Die 3D-Druckvorrichtung umfasst daher eine oder mehrere Inspektionseinheiten (3, 5) umfasst, die dazu eingerichtet sind, die Platte (28), das Durchlaufband (9), das Fremdbauteil (7), eine zuvor aufgebrachte Druckmassenschicht oder das gedruckte Objekt zu vermessen.

Ebenfalls kann das erfindungsgemäße Verfahren bzw. die erfindungsgemäße Vorrichtung Gebrauch von folgenden Methoden machen:
- Detektion bzw. geometrische Vermessung der Druckmassen während des Drucks, wie beispielsweise beschrieben in WO2017108208 A1
- Höhenmessung mittels konfokaler Messeinrichtung zur Bestimmung des Abstands zwischen Druckkopf und Druckoberfläche, wie beispielsweise beschrieben in WO2018014948 A1
- Bestimmung der Topografie der zu bedruckenden Oberfläche, und davon abhängige Steuerung des Setzens von Druckmasse, wie beispielsweise beschrieben in PCT/EP2019/077812 (noch unveröffentlicht)

Nach Abschluss des Aufbaus kann das Objekt gegebenenfalls nachbehandelt werden, wobei die Nachbehandlung aus einer oder mehreren der folgenden Methoden ausgewählt ist: Wärmebehandlung, Bestrahlung, Oberflächenbeschichtung, Gravieren, Setzen von Schnitten, Teilen und Abtrennen von Segmenten, Zusammenfügen einzelner Bauteile, Reinigung, Entfernen von Stützmaterial.

Die 3D-Druckvorrichtung umfasst daher wenigstens eine Nachbehandlungseinheit (4, 6), die dazu eingerichtet ist, das gedruckte Objekt nach dem Druck nachzubehandeln.

In einer bevorzugen Ausführungsform stellt die 3D-Druckvorrichtung ein Produktionsanlagenverbundsystems umfassend eine oder mehrere der oben und anhand der Figuren näher beschriebenen Einheiten dar, wie z.B. Bestückungseinheit, Druckeinheit, Aushärteeinheit, Aufarbeitungseinheit, Inspektionseinheit, Nachbehandlungseinheit, und/oder Entnahmeeinheit.

Vorzugsweise werden die Objekte getempert wie beispielsweise in WO2010015547 A1 beschrieben.

In einer besonderen Ausführungsform werden die Druckmassen so aufgebracht werden, dass ein oder mehr Segmente innerhalb einer oder mehreren Druckebenen des Objekts entstehen, die jeweils aus nur einem objektbildenden Material oder Stützmaterial bestehen.

Möglich ist auch der Druck von verschieden Druckmaterialien ineinander, um ein konstantes Mischungsverhältnis mit spezifischen Eigenschaften zu erhalten (z.B. wird ein Material der Härte ShoreA 20 mit einem Material der Härte ShoreA 60 gemischt, um eine Härte von ShoreA 40 zu erhalten).

Die Druckmassen der objektbildenden Materialien können beispielsweise so aufgebracht werden, dass ein oder mehr Segmente innerhalb einer oder mehreren Druckebenen des Objekts entstehen, die jeweils aus einer Mischung von zwei oder mehr objektbildenden Materialien bestehen und das Mischungsverhältnis der objektbildenden Materialien in jedem Segment konstant ist.

Weiterhin möglich ist es auch Druckmaterialien so ineinander zu drucken, dass Gradienten erhalten werden, z.B. Härtegradienten (beispielswiese von ShoreA 20 bis ShoreA 60), Leitfähigkeitsgradienten (beispielsweise von elektrisch leitfähig zu nicht elektrisch leitfähig) oder Magnetismusgradienten (beispielsweise von magnetisch zu nicht magnetisch)

Weiterhin können Druckvoxel der einzelnen Druckmassen so aufgebracht werden, dass ein oder mehr Segmente innerhalb einer oder mehreren Druckebenen des Objekts entstehen, die jeweils aus einer Mischung von zwei oder mehr objektbildenden Druckmaterialien bestehen, wobei das Mischungsverhältnis der objetktbildenden Druckmaterialien in jedem Segment einem Gradienten unterliegt.

Eine Beschreibung solcher Segmente und Gradienten ist beispielsweise in WO2019063094 A1 offenbart.

Nachfolgend werden Ausführungsformen der Erfindung anhand der beigefügten Figuren näher erläutert.

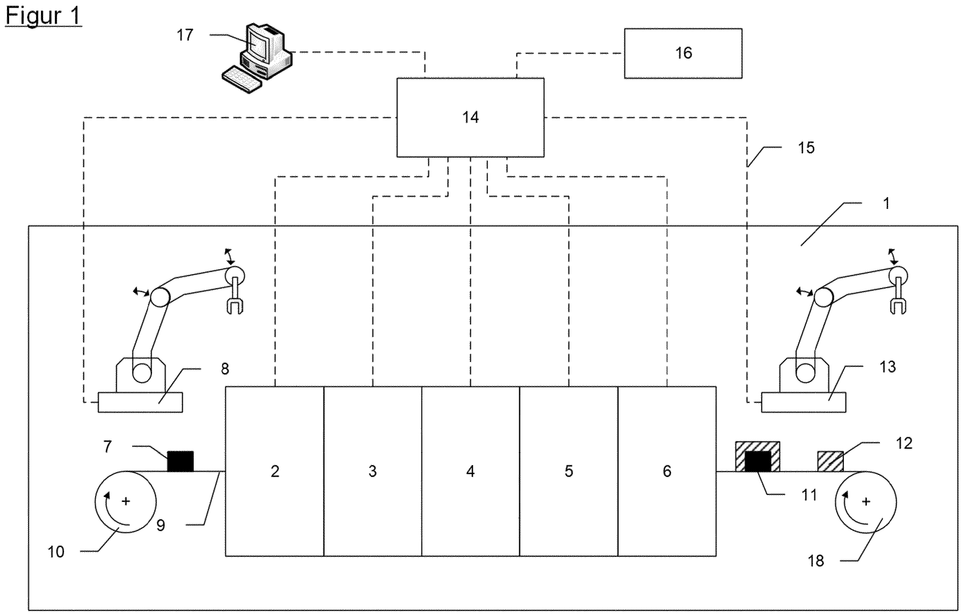

Das Schema eines Produktionsanlagenverbundsystems ist in **Figur 1** abgebildet. Zu bedruckende Rohlinge/ Fremdbauteile (7) werden mit einer automatischen Bestückungseinheit (8) auf ein Durchlaufband (9) präzise platziert und mit dem Durchlaufband (9) in den Anlagenverbund eingeschleust. Das Durchlaufband wird dabei aus einem Bandspeicher Bandzuführer (10) entnommen und unter mechanischer Zugspannung gehalten. Nach Einfuhr in die 3D-Druckeinheit (2) wird der zu bedruckende Rohling/ das Fremdbauteil (7) bedruckt und oder ein neues 3D-Einzelteil gedruckt.

Nach diesem Druckprozess werden die so hergestellten Teile mit dem Durchlaufband (9) in die Inspektionseinheit (3) verbracht. Hier werden verschiedene Vermessungen vorgenommen und die Teile kontrolliert.

Nach der Kontrolle durch Inspektionseinheit (3), werden die Teile per Durchlaufband (9) in die Nachbehandlungseinheit (4) verbracht. Hier können verschiedene Nachbehandlungsschritte vorgenommen. Vorzugweise ein Nachvernetzen und Tempern.

Die Teile werden anschließend per Durchlaufband (9) in die zweite Inspektionseinheit (5) verbracht und nochmalig vermessen. Darauf erfolgt ein eine Verbringung mit (9) in eine Finalbehandlungseinheit (6).

In Finalbehandlungseinheit (6) erfolgen alle letzten physikalischen Schritte vor Ausschleusung aus dem Verbund. Hierbei werden vorzugsweise folgende Schritte vorgenommen:
- Tempern, Auslösen der Stützmassen
- Schnitt der Teile mittels Laser, Ultraschallmesser
- Gravieren, Benummerung der Druckteile
- Spülen und Waschen
- Oberflächenbehandlung (Plasmabehandlung)

Nach Ausschleusung aller bedruckten Teile (11) und/oder der neu erstellten 3D-gedruckten Körper (12), werden über eine automatische Entnahmeeinheit (13) die Teile entnommen. Das Durchlaufband wird am Ende des Verbundes in einem Bandspeicher (18) gesammelt.

Alle, sich in der Produktionsverbundanlage (1) befindlichen Einheiten (8, 2, 3, 4, 5, 6, 13) sind mit einer übergeordneten Steuerung / Datenverarbeitungssystem (14) über die Datenschnittstellen / Datenverbindungen (15) verbunden. Alle Prozessdaten, Druckdaten, Messdaten und Druckgeometrie usw. werden in Datenverarbeitungssystem (14) entsprechend unterschiedlicher Verknüpfungen und Datenverarbeitungen verarbeitet. In Datenbanksystem (16) werden dabei alle relevanten Prozessdaten und Messdaten für eine Qualitätskontrolle und Produktdokumentation abgespeichert. Alle Eingaben von Daten und Prozessparametern erfolgt über das Eingabesystem (17).

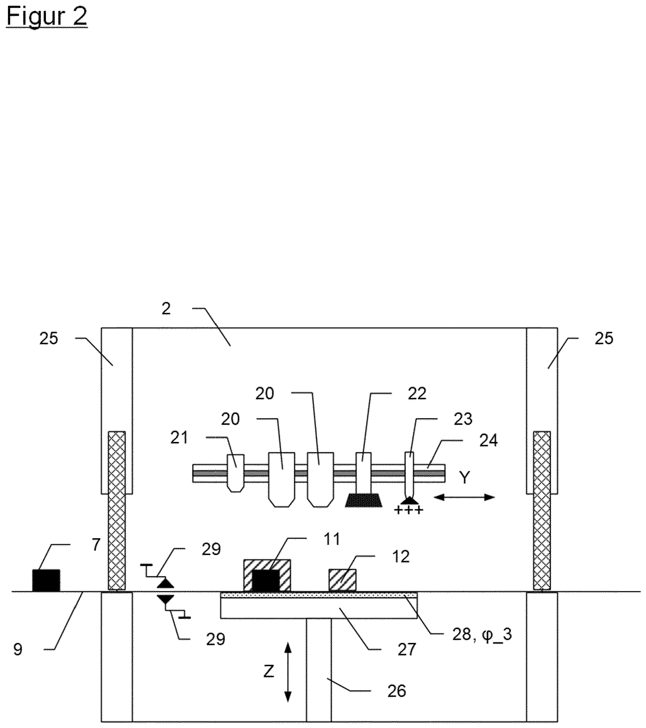

In **Figur 2** ist eine Skizze einer Druckeinheit (2) abgebildet. Über eine Schleuse (25) wird das Durchlaufband (9) mit Rohlingen (7) der Druckeinheit (2) zu- und abgeführt. Über das Vorentlademodul (29) werden alle eingeschleusten Teile und das Durchlaufband (9) vor dem Druck, elektrostatisch entladen. Durch die Druckmodule (20) werden Druckmassen und oder Stützmassen platziert. Durch das Aushärtemodul (22) wird eine Vernetzung der Druckmassen vorgenommen. Durch das elektrostatisches Lade-/Entlademodul (23) werden die platzierten Massen, zu bedruckende Rohling (Körper) (7), bedruckte Rohlinge (Körper) (11) und 3D-gedruckte Einzelteile (12) elektrostatisch definiert auf das Potential Phi_2 geladen. Über das Sensorikmodul (21) geometrische und physikalische Daten erfasst und für den Druckprozess verwendet. Alle Module werden durch die Verfahrachse Y (24) in Y Richtung über dem Auflagetisch (27) bewegt. Der Auflagetisch (27) fixiert mit der Vakuumplatte (28) das Durchlaufband (9). Über die Verfahrachse Z (26) wird der Auflagetisch (27) präzise in Z Richtung bewegt und dabei der jeweilige Abstand von der zu bedruckenden Zieloberfläche (59) eingestellt. Die Einstellgenauigkeiten sind hierbei entsprechend den Druckgenauigkeiten und Schichtdicken im Bereich kleiner 1 mm. Vorzugsweise unter 0,1 mm und besonders bevorzugt unter 0,01 mm.

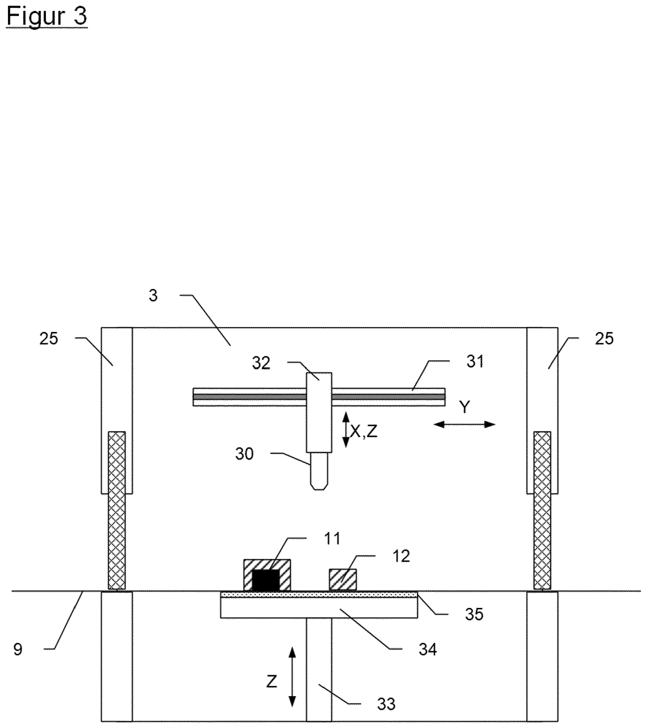

In **Figur 3** ist eine Skizze einer Inspektionseinheit (3) abgebildet. Über eine Schleuse (25) wird das Durchlaufband (9) mit bedruckten Rohlingen (11) und 3D-gedruckte Einzelteile (12) der Inspektionseinheit zu- und abgeführt. Die bedruckten Rohlinge (11) und die 3D-gedruckte Einzel-teile (12) werden über ein Sensorikmodul (30) vermessen. Das Durchlaufband (9) wird hierbei wieder mit einer Vakuumplatte (35) einer Auflageplatte (34) und einer Verfahrachse Z (33) fixiert und positionell und bzgl. Ebenheit eingestellt. Für weitere Abstandseinstellungen und die Verfahrung in X Richtung (in die Blattebene) wird die Verfahrachse X, Z (32) des Sensorikmodules (30) verwendet. Der Vorteil einer Verwendung verschiedener Z Verfahreinheiten, ist der Einsatz unterschiedlich präziser und unterschiedlich schneller Achsen für unterschiedliche Aufgaben.

Das Sensorikmodul (30) kann variabel ausgestaltet sein. Es kann verschiedene optische Abstandsmessungen, Lasertriangulationssensoren, konfokale Sensoren, Ultraschall, IR-Messtechnik, Polarisationsmesstechnik, optische Spektrometer und oder elektromagnetische Messtechnik wie bspw. Wirbelstromsensoren oder koaxiale Sensoren enthalten.

Vorzugsweise werden folgende Parameter in der Inspektionseinheit bestimmt:
- Bauteilabmessungen (konfokal, Lasertriangulation, Ultraschall)
- Leitfähigkeit (Wirbelstrom, elektromagnetische Messung)
- Aushärtezustand (IR Spektrometrie im Durch- und Transmissionsverfahren)

Die Beiden Inspektionseinheiten (3) und (4) sind vergleichbar aufgebaut und können gleiche oder unterschiedliche Eigenschaften bestimmen.

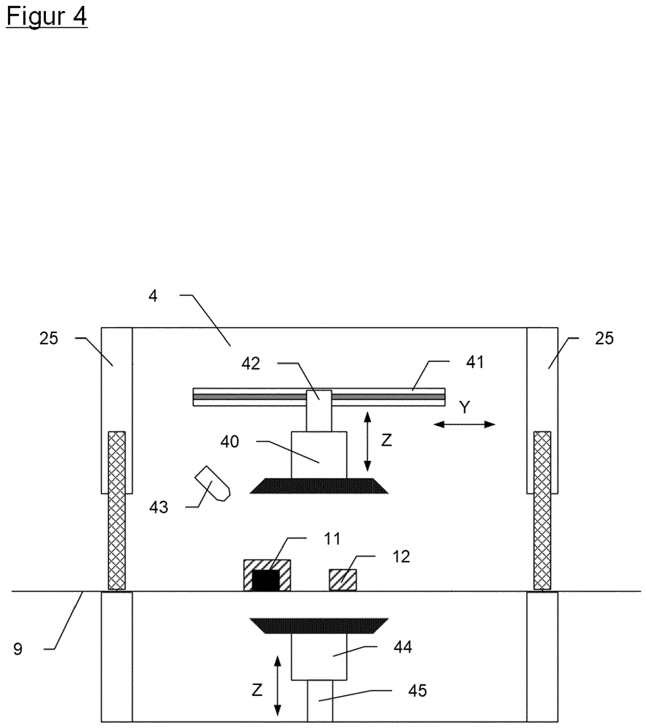

In **Figur 4** ist eine Skizze einer Nachbehandlungseinheit (4) abgebildet. Über eine Schleuse (25) wird das Durchlaufband (9) mit bedruckten Rohlingen (11) und 3D-gedruckte Einzelteile (12) der Nachbehandlungseinheit zu- und abgeführt. Über die beiden Aushärtemodule (40) und (44) wird eine Nachbehandlung der Körper (11) und (12) vorgenommen. Die Positionierung der oberen Nachbehandlungseinheit (40), wird dabei durch Verfahrachse Y (41) und die Verfahrachse Z (42) vorgenommen. Die Positionierung der unteren Nachbehandlungseinheit (44), wird durch die Verfahrachse Z (45) vorgenommen. Durch ein Sensorikmodul (43) werden Prozessparameter wie Bspw. die Oberflächentemperatur berührungslos gemessen. Die Nachbehandlung erfolgt, damit eine vollständige Vernetzung der Druckmassen erreicht wird.

Hierbei können die Nachbehandlungsmodule beispielsweise in folgender Weise ausgestattet sein:
- Thermisch (z.B. IR, Heißluft, Heizelemente)
- Bestrahlung (z.B. UV, UV-Laser, NIR/MIR Laser)
- Elektronenstrahl (z.B. E-Beam)

Behandlungszeiten, Verfahren und Module sind entsprechend der Druckmassen und Druckmassenzusammensetzungen verschieden.

In **Figur 5** ist eine Skizze eines Druckmodules (20) im Querschnitt abgebildet. Dabei wird mittels einer Laserquelle (50) eine Druckmassenschicht / Elektrodenmassenschicht (54) über einen Laserstrahl (50a) von einem strahlungs durchlässigen Trägerzylinder (51) abgelöst. Die Ablösung erfolgt im Ablösebereich (55). Hierbei wird durch den Laserstrahl (50a) eine Erwärmung induziert die eine Verdampfung / Gasbildung / thermische Ausdehnung mindestens einer Komponente der Druckmasse / Elektrodenmasse (54) verursacht. Die Ablösung der Druckmassenschicht (54) reicht bei gängigen LIFT Prozessen aus, um abgelöste Druckmassen (57) auf einer Zieloberfläche (59) zu platzieren. Durch die Drehung des Trägerzylinders (51) gegen den Uhrzeiger, wird mit dem Auftragssystem (52) eine präzise Schicht mit Druckmasse (54) aufgetragen. Nach der Ablösung durch den Laser (51) bewegen sich die verbliebenen Druckmassen und abgelösten Bereiche (56) in das Abtragesystem (53) und darin werden alle Restmengen an Druckmassen von Trägerzylinder (51) entfernt. Die hier entfernten Massen, werden wiederaufbereitet und wiederverwendet.

Im besonderen Fall des LIFT-Prozesses mit Siliconelastomeren, ist eine Verbesserung dieses Ablösens und Platzierens mit einer zusätzlichen Aufladung der Druckmasse (54) und des Zieloberflächenbereiches (59) zu erreichen. Dabei wird die Druckmasse (54) mit dem elektrischen Potential (ϕ_1), die Zieloberfläche mit dem elektrischen Potential (ϕ_2) und die Vakuumplatte (28) mit dem elektrischen Potential (ϕ_3) aufgeladen. Die Polarität der Potentiale, ist dabei so zu wählen, dass sich eine entgegengesetzte Ladung ergibt. Durch die Ladungen der Schichten im Abstand (h) voneinander entstehenden elektrischen Felder (E). Diese bewirken wiederum auf die Druckmasse (54) Kräfte in Richtung der Zieloberfläche (59). Somit wird eine abgelöste Druckmasse (57) durch die elektrostatischen Kräfte beschleunigt und in Richtung der Zieloberfläche (59) bewegt. Die abgelösten Druckmassen (57) werden beim Ablösen und beim Auftreffen mechanisch erheblichen Scherkräften ausgesetzt. Eine vorteilhafte Materialzusammensetzung (scherverdünnende Silicone), wirkt hier vorteilhaft bei der Bildung einer geschlossenen Druckmassenschicht (58). Scherverdünnende Siliconzusammensetzungen sind beispielsweise in WO2017081028A1, WO2017089496 A1 und WO2017121733 A1 beschrieben. Weiter wirken die elektrostatischen Kräfte der verbleibenden Ladungen in der gesetzten Druckmasse (58) in Richtung der Vakuumplatte (28). Vorteilhaft für die Relaxation erweist sich eine Aufladung der Zieloberfläche (59) an der Oberfläche mit dem Potential (ϕ_2), in geringeren Höhen als die Ladungsmenge der gesetzten Druckmassen (58). Eine verbleibende Ladung der Masse (58) ist so zu wählen, dass eine Beeinflussung der Felder (E), so gering wie möglich ist, jedoch eine Relaxation der Druckmassen (58) verbessert oder beschleunigt wird.

In vielen Ausführungen des bekannten LIFT-Verfahrens, wird auf die Fokussierung des Laserstrahls auf die Grenzfläche Druckmasse (54) und Trägersystems (51) verwiesen. In der Ausführung mit Siliconen hat die Fokussierung oberhalb des Trägers ein besseres Druckbild zur Folge. Der Fokuspunkt (50b) liegt dabei im Bereich einiger Mikrometer bis einiger Millimeter oberhalb der Grenzschicht Trägerzylinder (51) / Druckmasse (54). Eine Fokussierung des Laserstrahls auf, innerhalb oder unter der Grenzfläche ergibt zunächst eine Ablösung (55), jedoch führt dies anschließend zu einer erheblichen Nacherwärmung auf der Zieloberfläche (59) und damit ggf. zu einem Verbrennen oder thermischen Degenerieren der applizierten Druckmasse (58).

Der Laserstrahl (50a) ist auch nutzbar, um die platzierten Druckmassen aufzuheizen und punktuell zu vernetzen. Dabei wird die Dosierung der Druckmassen abgeschaltet und der Trägerzylinder ist ohne Druckmassenschicht rein transmissiv. Durch eine Defokussierung wird die eingebrachte Energie auf die Druckebene ausgerichtet und gezielt in definierten Durchmessern aufgebracht. Eine separate Aushärteeinheit (z.B. IR, Ofen) kann dadurch entfallen.

Weiter kann durch gezielte Leistungseinbringung nicht nur die Vernetzung mittels dem Lasersystem (50) erreicht werden, sondern ebenfalls ein Schmelzen, Verschmelzen, Sintern sowie Gravieren und Schneiden von unterschiedlichsten Druckmassen erreicht werden. Eine Aushärtung und spätere Prozessschritte wie oben in der Einheit (6) beschrieben können somit auch in einem Gerät zusammengefasst werden.

In einer besonderen Ausführung werden Druckmassen / Stützmassen mit thermisch schmelzbaren Massen wie Wachsen oder PEG verwendet. Dabei wird der Trägerzylinder (51), das Auftragesystem (52) und das Abtragesystem (53) beheizt werden. Dabei können ich im Inneren des Trägerzylinders (51) Heizelemente befinden und oder beliebige Wärmezuführungssystem (z.B. Wärmeträgeröl oder Heißluft) verwendet werden.

In einer besonderen Ausführungsform kann der Trägerzylinder und der Bauraum des Druckers gekühlt ausgeführt sein. Ziel dieser Form, ist es eine ungewollte Vernetzung der Druckmassen so weit wie möglich zu vermindern.

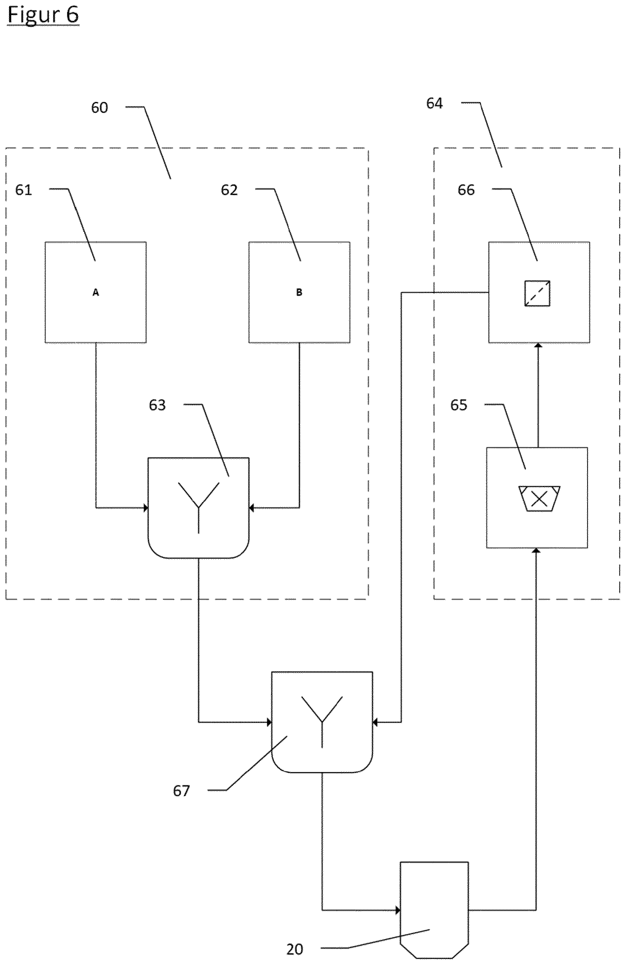

In **Figur 6** ist eine Skizze des Materialflusses der Druckmasse abgebildet. Durch das Bereitstellungssystem (60) werden frische Druckmasse(n) dem Drucksystem zugeführt. Das System (60) besteht aus zwei Dosiereinheiten (61) (62) für die eine zweikomponentige Druckmasse bestehend aus A- und B-Komponenten. Über das Mischsystem (63) werden die beiden Massen (A, B) vermischt und einem weiteren Mischsystem (67) zugeführt. Das Mischsystem (67) mischt die neue Druckmasse mit wiederaufbereiteten Druckmasse. Die so gemischte Druckmasse wird dem Druckkopf (2) zugeführt, respektive dem Auftragesystem (52). In der Rezyklataufarbeitungseiheit (64) werden die rückgeführten Massen aus dem Abtragesystem (53) wiederaufbereitet. Das Aufarbeitungssystem (64), besteht dabei aus einem mechanischem (erstes) Aufarbeitungssystem (65) und einem zweiten Aufarbeitungssystem (66). Die mechanische Aufarbeitung umfasst dabei eine Zerkleinerung und Filterung. Die zweite Aufarbeitung umfasst dabei eine Entgasung, eine Be- oder Entfeuchtung sowie ggf. eine Beimengung von weiteren Bestandteilen der Druckmassenrezeptur (z.B. Lösungsmittel, Wasser, Katalysator, Vernetzer, etc.)

Die Vorteile der vorliegenden Erfindung sind nachfolgend nochmals zusammengefasst:
- Verwendung variabler Druckmassen unterschiedlicher Eigenschaften (z.B. variable Viskosität) und Zusammensetzung in einem Drucksystem wird ermöglicht.
- Ein hoher Materialdurchsatz von mehr als 1 kg /h wird ermöglicht.
- Geringerer Verschleiß, da nur wenige mechanisch schnell bewegte Elemente verwendet werden (z.B. werden keine Düsen benötigt wie bei Jetting Verfahren).
- Die Voxelgröße und Schichtdicke ist variabel über das Auftragesystem und den Laser einstellbar.
- Hohe Druckqualität durch stabile Abstandseinstellung des fest positionierten Trägerzylinder (z.B. kein Flattern von Folienträgern).
- Einsatz eines kleinen Zylinders möglich, somit geringe mechanische Toleranzen.
- Die Größe und der Bauraum der Laserquelle sind nicht beschränkt bei der Durchstrahlung durch die obere freie Zylinderfläche.
- Geringe offene Fläche (geringer Luftkontakt) der Druckmasse auf dem Trägersystem.
- Hohe Präzision (mögliche Voxelgrößen < 100 µm).
- Durch die optionale Verwendung eines Durchlaufbandes fallen mehrere manuelle Arbeitsschritte weg.
- Die optionale Verwendung von E-Beam ermöglicht die schnelle Vernetzung von Druckmassen ohne Vernetzungskatalysator.
- Durch die Verwendung des Lasers (50) zur Aushärtung / zusätzlichen Anwendung sind neue Freiheitsgrade im generativen Herstellungsprozess möglich. Dies ermöglicht beispielsweise neue Aushärtestrategien (punktueller Vernetzungsgrad einstellbar) sowie Abtrag, Auftrag, Aushärten parallel mit einem Gerät.

Folgende Experimente wurden durchgeführt, um einzelne prinzipielle Funktionsweisen der Erfindung vergleichsweise zu zeigen. Diese Experimente dienen dem besseren Verständnis der Erfindung und sind gegenüber der oben detailliert und anhand der Figuren beschriebenen Erfindung als nicht einschränkend zu verstehen.

Der LIFT-Prozess wurde mit einem gängigen Laser-Gravursystem der Firma TROTEC Laser Deutschland GmbH durchgeführt. Zu Anwendung kommt dabei ein System der Baureihe Speedy 100flexx 60/20 mit Dual Laserquelle (60 W 10,6 µm CO2 Laser; 20 W 1,06 µm Faser-Laser). Als Druckmassenträger wurden gängige 300 mm hochohmige und polierte Silizium-Wafer, der Firma Siltronic AG, Deutschland, verwendet. Zur Aufbringung des Druckmassenfilmes wurde ein ZAA2300 automatisches Filmziehgerät mit einem ZUA 2000 Universal-Applikator der Firma Zehntner GmbH, Schweiz, verwendet. Als Druckmasse wurde ELASTOSIL^{®} RT 625 A/B, ein RTV-2 Silicon der Firma WACKER Chemie AG, Deutschland, verwendet.

### Experiment 1: LIFT-Verfahren

Mit dem Rakelsystem wurde einseitig auf einem Wafer eine homogene Schicht mit einer Dicke von 100 µm und in den Abmessungen 150x150 mm mittig aufgebracht. Die Randbereiche des Wafers bleiben dabei frei von Druckmasse. In den Schneidraum des Lasers wurde eine unbeschichtete und gereinigte Glasscheibe als zu bedruckende Fläche eingelegt. Der beschichtete Wafer wird mit der Beschichtungsseite der unbeschichteten Glasscheibe zugewandt, in einem Abstand von 200 µm auf der Glasscheibe platziert. Der Abstand wird dabei durch Abstandshalter wie beispielsweise 100 µm Mikroskopplatten eingestellt. Als Druckvorlage in der Steuersoftware des Lasersystems, ist eine flächig gefüllte Geometrie ohne Graubereiche und Schattierungen zu wählen. Weiter ist die Laserleistung im Gravurmodus zwischen 20-40 % bei einem 60 W Laser ausreichend. Der Laserspeed ist zwischen 30 und 60 % zu wählen. Der Fokuspunkt sollte 2 bis 3 mm oberhalb der Grenzfläche Beschichtung bzw. des Wafers liegen. Die gewählten Geometrien konnten so durch den Laser transferiert werden.

### Experiment 2: EF LIFT-Verfahren

Auf einer Glasscheibe wurde eine Siliconfolie (ELASTOSIL^{®}-Film mit 100 µm Dicke, erhältlich bei der WACKER Chemie AG) durch einen Wasserfilm fixiert. Die Oberseite der Siliconfolie wurde anschließend durch einen Ladesystem der Firma Simco-Ion, bestehend aus Hochspannungsladegerät der Serie CM LITE, HDR Ladeelektrode, auf -300V geladen. Die Messung der Aufladung wurde mittels des Elektrostatik-Messgerätes SK050, und der Auswerteinheit SK1000 der Firma Keyence nachgeprüft. Eine vergleichbare Aufladung auf +100 V wurde mit der Druckmassenschicht auf dem Wafer durchgeführt. Auf eine ungewollte Entladung und sichere Handhabung der Halbleiterscheiben nach und bei der Aufladung der Druckmasse ist zu achten. Anschließend werden beide Platten wieder im Schneidraum des Lasers platziert. Der Abstand der Druckmasse zur Siliconfolie kann im Bereich 100 bis 400 µm mit Abstandshalter gewählt werden. Der LIFT-Vorgang ist analog der oberen Beschreibung durchzuführen. Ohne die genannte Aufladung wurden abgelöste Druckmassen teilweise unvollständig bzw. ungezielt transferiert. Weiter wurden durch die Aufladung eine homogenere Ablage und ein besserer Verbund der transferierten Schichten erreicht.

### Experiment 3: Aushärtung mittels Laser

Der Silizium-Wafer wurde entfernt und durch die direkte Bestrahlung mittels Laser die transferierte Schicht vernetzt. Dabei ist die Laserleistung im Gravurmodus zwischen 10-40 % bei einem 60 W Laser ausreichend. Der Laserspeed ist zwischen 10 und 60 % zu wählen. Der Fokuspunkt sollte 1 bis 2 mm oberhalb der Grenzfläche Beschichtung bzw. des Wafers liegen. Eine vollständige Vernetzung kann mehrere Laserdurchgänge erfordern. Dabei kann auch eine teilweise Vernetzung respektive die Einstellung des Vernetzungsgrades durch die Anzahl der Durchgänge und die Laserleistung vorgenommen werden.

### Bezugszeichen der Figuren

**Figur 1****:** Produktionsanlagenverbundsystem
   - 1.: 3D-Produktionsverbundanlage
   - 2.: 3D-Druckeinheit
   - 3.: Inspektionseinheit
   - 4.: Nachbehandlungseinheit
   - 5.: Inspektionseinheit
   - 6.: Finalbehandlungseinheit
   - 7.: bedruckbarer Rohling (Körper)
   - 8.: Bestückungseinheit
   - 9.: Durchlaufband
   - 10.: Bandspeicher / Bandzuführer
   - 11.: bedruckter Rohling (Körper)
   - 12.: 3D-gedrucktes Einzelteil / 3D-gedruckter Körper
   - 13.: Entnahmeeinheit
   - 14.: Übergeordnete Steuerung / Datenverarbeitungssystem
   - 15.: Datenschnittstellen / Datenverbindungen
   - 16.: Datenbanksystem
   - 17.: Eingabesystem
   - 18.: Bandspeicher
   - 19.: Frei
**Figur 2****:** 3D-Druckeinheit
   - 20.: Druckmodul
   - 21.: Sensorikmodul
   - 22.: Aushärtemodul
   - 23.: elektrostatisches Lade-/Entlademodul

   - 24.: Schleuse
   - 25.: Verfahrachse Y
   - 26.: Verfahrachse Z
   - 27.: Auflagetisch
   - 28.: Vakuumplatte
   - 29.: Vorentlademodul
**Figur 3****:** Inspektionseinheit
   - 30.: Sensorik Modul
   - 31.: Verfahrachse Y
   - 32.: Verfahrachse Z Sensorik Modul
   - 33.: Verfahrachse Z Auflagetisch
   - 34.: Auflagetisch
   - 35.: Vakuumplatte
   - 36.: Frei
   - 37.: Frei
   - 38.: Frei
   - 39.: Frei
**Figur 4****:** Nachbehandlungseinheit
   - 40.: oberes Nachbehandlungsmodul
   - 41.: Verfahrachse Y oberes Nachbehandlungsmodul
   - 42.: Verfahrachse Z oberes Nachbehandlungsmodul
   - 43.: Sensorikmodul
   - 44.: unteres Nachbehandlungsmodul
   - 45.: Verfahrachse Z unteres Nachbehandlungsmodul
   - 46.: Frei
   - 47.: Frei
   - 48.: Frei
   - 49.: Frei
**Figur 5****:** Druckmodul
   - 50.: Laserquelle
   - 50a.: Laserstrahl

   - 50b.: Fokuspunkt Laserstrahl
   - 51.: Trägerzylinder
   - 52.: Auftragesystem
   - 53.: Abtragesystem
   - 54.: Druckmassenschicht
   - 55.: Ablösebereich Druckmasse
   - 56.: Bereich abgelöster Druckmasse auf dem Trägerzylinder
   - 57.: Druckvoxel / abgelöste Druckmasse
   - 58.: platzierte Druckmasse
   - 59.: zu bedruckende Oberfläche
**Figur 6****:** Prozessdiagramm Materialfluss
   - 60.: Druckmaterial Bereitstellungseinheit
   - 61.: Dosiereinheit Druckmasse Edukt Komponente A
   - 62.: Dosiereinheit Druckmasse Edukt Komponente B
   - 63.: Mischsystem
   - 64.: Rezyklataufarbeitungseinheit
   - 65.: mechanisches (erstes) Aufarbeitungssystem
   - 66.: zweites Aufarbeitungssystem
   - 67.: Mischer Alt- und Neumaterial
   - 68.: Frei
   - 69.: Frei

## Patentansprüche

1. Verfahren zur schichtweisen Herstellung von Objekten mittels Lasertransferdruck in einer 3D-Druckvorrichtung umfassend wenigstens eine Platte (28), wenigstens eine Laserquelle (50), und wenigstens einen Trägerzylinder (51); wobei das Material des Trägerzylinders (51) transparent für die Laserstrahlen (50a) der Laserquelle (50) ist und die Laserquelle (50) oberhalb des Trägerzylinders (51) angeordnet ist, wobei das Verfahren folgende Schritte umfasst:
(a) Beschichten wenigstens eines Teils der äußeren Oberfläche des Trägerzylinders (51) mit wenigstens einer Druckmasse (54);
(b) Bestrahlung des Trägerzylinders (51) mit Laserstrahlen (50a) der Laserquelle (50), so dass wenigstens ein Teil der aufgetragenen Druckmasse (54) vom Trägerzylinder (51) abgelöst wird und auf die Platte (28), auf ein darauf positioniertes Fremdbauteil (7) oder auf eine zuvor aufgebrachte Druckmassenschicht transferiert wird; wobei die Bestrahlung so erfolgt, dass die Laserstrahlen (50a) von außerhalb des Trägerzylinders (51) durch beide Wände des Trägerzylinders (51) hindurch direkt auf die auf der unteren Seite des Trägerzylinders (51) aufgetragene Druckmasse (54) treffen,
(c) Ausbildung einer Druckmassenschicht durch Aushärten der in Schritt (b) transferierten Druckmasse (54),
(d) Wiederholung der Schritte (a) bis (c) bis das Objekt vollständig aufgebaut ist.

2. Verfahren gemäß Anspruch 1, wobei auf der Platte (28) ein Durchlaufband (9) beweglich angeordnet ist und in Schritt (b) Druckmasse (54) vom Trägerzylinder (51) abgelöst wird und auf das Durchlaufband (9), auf ein darauf positioniertes Fremdbauteil (7) oder auf eine zuvor aufgebrachte Druckmassenschicht transferiert wird.

3. Verfahren gemäß Anspruch 1 oder 2, wobei vor Schritt (b) die auf den Trägerzylinder (51) aufgetragenen Druckmasse (54) auf ein Potential Phi_1 aufgeladen wird, und die Platte (28) auf ein Potential Phi_3 aufgeladen wird, wobei Phi_1 und Phi_3 entgegengesetzte Polaritäten aufweisen.

4. Verfahren gemäß Anspruch 3, wobei zusätzlich die Oberfläche des Fremdbauteils (7), der zuvor aufgebrachten Druckmassenschicht und/oder des Durchlaufbands (9) auf ein Potential Phi_2 aufgeladen wird, wobei Phi_2 und Phi_1 entgegengesetzte Polaritäten aufweisen und Phi_2 so gewählt wird, dass wenigstens ein Teil der Ladungsmenge der in Schritt (b) transferierten Druckmasse (54) auf der zu bedruckenden Oberfläche neutralisiert wird.

5. Verfahren gemäß einem der Ansprüche 1 bis 4, wobei sich der Trägerzylinder (51) dreht und in Schritt (a) durch ein Auftragesystem (52) eine Schicht mit Druckmasse (54) auf den Trägerzylinder (51) aufgetragen wird und nach Schritt (b) nicht abgelöste Druckmasse (54) durch ein Abtragesystem (53) vom Trägerzylinder (51) entfernt wird.

6. Verfahren gemäß einem der Ansprüche 1 bis 5, wobei als Druckmassen ein oder mehrere der folgenden objektbildenden Materialien eingesetzt werden: Silicone, Polyacrylate, Polyolefine, Polyurethane, Polyharnstoffe, Polynitrile, Polyester, Polyether, Polylactide, Polyhdroxyalkanoate, sowie Mischungen, Lösungen, Dispersionen oder Copolymeren umfassend eines oder mehrere der vorgenannten objektbildenden Materialien.

7. Verfahren gemäß einem der Ansprüche 1 bis 6, wobei wenigstes eine Druckmasse ausgewählt ist aus der Gruppe bestehend aus vernetzbaren Siliconelastomerzusammensetzungen, Silicongelen, Siliconharzen, Siliconölen und Silicondispersionen.

8. Verfahren gemäß einem der Ansprüche 1 bis 7, wobei zusätzlich ein oder mehrere Stützmaterialien als Druckmasse eingesetzt werden, die nach Aufbau des Objekts entfernt werden.

9. Verfahren gemäß einem der Ansprüche 1 bis 8, wobei der Fokuspunkt (50b) der Laserstrahlen (50a) so gewählt wird, dass er sich innerhalb des Trägerzylinders in einem Bereich von 0,01 mm bis 10 mm oberhalb der Grenzfläche zwischen Druckmasse (54) und Trägerzylinder (51) befindet.

10. Verfahren gemäß einem der Ansprüche 1 bis 9, wobei die Platte (28) eine bewegliche Vakuumplatte ist, die das Durchlaufband (9) für Schritt (b) in einem bestimmten Abstand zum beschichteten Trägerzylinder (51) fixiert.

11. Verfahren gemäß einem der Ansprüche 1 bis 10, wobei die zu bedruckende Oberfläche der Platte (28), des Durchlaufbands (9), des Fremdbauteils (7) oder der zuvor aufgebrachten Druckmassenschicht durch ein Vorentlademodul (29) vor Schritt (b) und gegebenenfalls vor Aufladung auf das Potential Phi_2 oder Phi_3 elektrostatisch entladen werden.

12. Verfahren gemäß einem der Ansprüche 1 bis 11, wobei das Material des Trägerzylinders (51) aus der Gruppe bestehend aus Glas, Quarzglas, Polyethylenterephthalat, Polycarbonat, Polyimid, Polymethylmethacrylat, ZnSe, ZnS, BaF₂, CaF₂, Ge, KBr, NaCl, MgF₂, LiF und Si ausgewählt ist.

13. 3D-Druckvorrichtung zur Herstellung von Objekten mittels Lastertransferdruck umfassend
- wenigstens eine Laserquelle (50);
- wenigstens einen Trägerzylinder (51), wobei das Material des Trägerzylinders (51) transparent für die Laserstrahlen (50a) der Laserquelle (50) ist,
- wenigstens ein Auftragesystem (52), das dazu eingerichtet ist, wenigstens einen Teil der äußeren Oberfläche des Trägerzylinders (51) mit wenigstens einer Druckmasse (54) zu beschichten;
- wenigstens eine Platte (28),
wobei die Laserquelle (50) oberhalb des Trägerzylinders (51) angeordnet und dazu eingerichtet ist, den Trägerzylinder (51) zu bestrahlen, so dass wenigstens ein Teil der auf den Trägerzylinder (51) aufgetragenen Druckmasse (54) abgelöst wird und auf die Platte (28), auf ein darauf positioniertes Fremdbauteil (7) oder auf eine zuvor aufgebrachte Druckmassenschicht transferiert wird,
wobei die 3D-Druckvorrichtung so eingerichtet ist, dass die Laserstrahlen (50a) von außerhalb des Trägerzylinders (51) durch beide Wände des Trägerzylinders (51) hindurch direkt auf die auf der unteren Seite des Trägerzylinders (51) aufgetragene Druckmasse (54) treffen.

14. 3D-Druckvorrichtung gemäß Anspruch 13, wobei auf der Platte (28) ein bewegliches Durchlaufband (9) angeordnet.

15. 3D-Druckvorrichtung gemäß Anspruch 13 oder 14, wobei die 3D-Druckvorrichtung wenigstens ein Lade-/Entlademodul (23) umfasst, das dazu eingerichtet ist, die die Oberfläche der auf den Trägerzylinder (51) aufgetragenen Druckmasse (54), die Oberfläche der Platte (28) und/oder die zu bedruckende Zieloberfläche jeweils unabhängig voneinander auf ein bestimmtes Potential Phi aufzuladen,

16. 3D-Druckvorrichtung gemäß einem der Ansprüche 13 bis 15, wobei die 3D-Druckvorrichtung wenigstens ein Aushärtemodul (22) umfasst, dass dazu eingerichtet ist die Druckmasse (54) auszuhärten.

17. 3D-Druckvorrichtung gemäß einem der Ansprüche 13 bis 16, wobei die 3D-Druckvorrichtung wenigstens ein Abtragesystem (53) umfasst, das dazu eingerichtet nicht abgelöste Druckmasse (54) vom Trägerzylinder (51) zu entfernen.

## Claims

1. Method of layer-by-layer production of objects by laser transfer printing in a 3D print apparatus comprising at least one plate (28), at least one laser source (50), and at least one carrier cylinder (51); wherein the material of the carrier cylinder (51) is transparent to the laser beams (50a) from the laser source (50) and the laser source (50) is disposed above the carrier cylinder (51), wherein the method comprises the following steps:
(a) coating at least part of the outer surface of the carrier cylinder (51) with at least one print material (54);
(b) irradiating the carrier cylinder (51) with laser beams (50a) from the laser source (50), such that at least a portion of the applied print material (54) is detached from the carrier cylinder (51) and is transferred to the plate (28), to an extrinsic component (7) positioned thereon or to a previously applied print material layer; wherein the irradiation is effected in such a way that the laser beams (50a)
hit the print material (54) applied to the lower side of the carrier cylinder (51) directly through both walls of the carrier cylinder (51) from outside the carrier cylinder (51),
(c) forming a print material layer by curing the print material (54) transferred in step (b),
(d) repeating steps (a) to (c) until the object has been fully constructed.

2. Method according to Claim 1, wherein a continuous belt (9) is in a movable arrangement on the plate (28) and, in step (b), print material (54) is detached from the carrier cylinder (51) and is transferred to the continuous belt (9), to an extrinsic component (7) positioned thereon or to a previously applied print material layer.

3. Method according to Claim 1 or 2, wherein step (b) is preceded by charging of the print material (54) applied to the carrier cylinder (51) to a potential phi_1, and charging of the plate (28) to a potential phi_3, wherein phi_1 and phi_3 have opposite polarities.

4. Method according to Claim 3, wherein the surface of the extrinsic component (7), of the previously applied print material layer and/or of the continuous belt (9) is additionally charged to a potential phi_2, wherein phi_2 and phi_1 have opposite polarities and phi_2 is chosen such that at least a portion of the charge on the print material (54) transferred in step (b) is neutralized on the surface to be printed.

5. Method according to any of Claims 1 to 4, wherein the carrier cylinder (51) rotates and, in step (a), an application system (52) applies a layer comprising print material (54) to the carrier cylinder (51), and print material (54) that has not been detached after step (b) is removed from the carrier cylinder (51) by a removal system (53) .

6. Method according to any of Claims 1 to 5, wherein the print materials used are one or more of the following object-forming materials: silicones, polyacrylates, polyolefins, polyurethanes, polyureas, polynitriles, polyesters, polyethers, polylactides, polyhydroxyalkanoates, and mixtures, solutions, dispersions or copolymers comprising one or more of the aforementioned object-forming materials.

7. Method according to any of Claims 1 to 6, wherein at least one print material is selected from the group consisting of crosslinkable silicone elastomer compositions, silicone gels, silicone resins, silicone oils and silicone dispersions.

8. Method according to any of Claims 1 to 7, wherein the print material used additionally includes one or more support materials that are removed after the object has been constructed.

9. Method according to any of Claims 1 to 8, wherein the focal point (50b) of the laser beams (50a) is chosen such that it is within the carrier cylinder within a range from 0.01 mm to 10 mm above the interface between print material (54) and carrier cylinder (51).

10. Method according to any of Claims 1 to 9, wherein the plate (28) is a movable vacuum plate that fixes the continuous belt (9) for step (b) at a particular distance from the coated carrier cylinder (51).

11. Method according to any of Claims 1 to 10, wherein the surface to be printed on the plate (28), the continuous belt (9), the extrinsic component (7) or the previously applied print material layer is electrostatically discharged by means of a preliminary discharge module (29) before step (b) and before any charging to potential phi_2 or phi_3.

12. Method according to any of Claims 1 to 11, wherein the material of the carrier cylinder (51) is selected from the group consisting of glass, quartz glass, polyethyleneterephthalate, polycarbonate, polyimide, polymethylmeth-acrylate, ZnSe, ZnS, BaF₂, CaF₂, Ge, KBr, NaCl, MgF₂, LiF and Si.

13. 3D print apparatus for production of objects by laser transfer printing, comprising
- at least one laser source (50);
- at least one carrier cylinder (51), wherein the material of the carrier cylinder (51) is transparent to the laser beams (50a) from the laser source (50),
- at least one application system (52) set up to coat at least part of the outer surface of the carrier cylinder (51) with at least one print material (54);
- at least one plate (28),
wherein the laser source (50) is disposed above the carrier cylinder (51) and is set up to irradiate the carrier cylinder (51) such that at least a portion of the print material (54) applied to the carrier cylinder (51) is detached and is transferred to the plate (28), to an extrinsic component (7) positioned thereon or to a previously applied print material layer,
wherein the 3D print apparatus is set up such that the laser beams (50a) hit the print material (54) applied to the lower side of the carrier cylinder (51) directly through both walls of the carrier cylinder (51) from outside the carrier cylinder (51) .

14. 3D print apparatus according to Claim 13, wherein a movable continuous belt (9) is arranged on the plate (28).

15. 3D print apparatus according to Claim 13 or 14, wherein the 3D print apparatus comprises at least one charging/discharging module (23) set up to charge the surface of the print material (54) applied to the carrier cylinder (51), the surface of the plate (28) and/or the target surface to be printed each independently to a particular potential phi.

16. 3D print apparatus according to any of Claims 13 to 15, wherein the 3D print apparatus comprises at least one curing module (22) set up to cure the print material (54).

17. 3D print apparatus according to any of Claims 13 to 16, wherein the 3D print apparatus comprises at least one removal system (53) set up to remove print material (54) that has not been detached from the carrier cylinder (51).

## Revendications

1. Procédé pour la fabrication, par couches, d'objets au moyen d'un impression par transfert au laser dans un dispositif d'impression 3D comprenant au moins une plaque (28), au moins une source laser (50) et au moins un cylindre support (51) ; le matériau du cylindre support (51) étant transparent aux rayons laser (50a) de la source laser (50) et la source laser (50) étant agencée au-dessus du cylindre support (51), le procédé comprenant les étapes suivantes :
(a) revêtement d'au moins une partie de la surface externe du cylindre support (51) par au moins une masse d'impression (54) ;
(b) irradiation du cylindre support (51) par des rayons laser (50a) de la source laser (50), de telle sorte qu'au moins une partie de la masse d'impression (54) appliquée est détachée du cylindre support (51) et transférée sur la plaque (28), sur une pièce étrangère (7) positionnée sur celle-ci ou sur une couche de masse imprimée appliquée au préalable ; l'irradiation ayant lieu de manière telle que les rayons laser (50a) frappent, depuis l'extérieur du cylindre support (51) à travers les deux parois du cylindre support (51), directement sur la masse d'impression (54) appliquée sur la face inférieure du cylindre support (51),
(c) formation d'une couche de masse imprimée par durcissement de la masse d'impression (54) transférée dans l'étape (b),
(d) répétition des étapes (a) à (c) jusqu'à ce que l'objet soit complètement construit.

2. Procédé selon la revendication 1, une bande continue (9) étant agencée de manière mobile sur la plaque (28) et, dans l'étape (b), la masse d'impression (54) étant détachée du cylindre support (51) et transférée sur la bande continue (9), sur une pièce étrangère (7) positionnée sur celle-ci ou sur une couche de masse imprimée appliquée au préalable.

3. Procédé selon la revendication 1 ou 2, la masse d'impression (54) appliquée sur le cylindre support (51) étant chargée, avant l'étape (b), à un potentiel Phi_1 et la plaque (28) étant chargée à un potentiel Phi_3, Phi_1 et Phi_3 présentant des polarités opposées.

4. Procédé selon la revendication 3, la surface de la pièce étrangère (7), de la couche de masse imprimée appliquée au préalable et/ou de la bande continue (9) étant en outre chargée à un potentiel Phi_2, Phi_2 et Phi_1 présentant des polarités opposées et Phi_2 étant choisi de manière telle qu'au moins une partie de la quantité de charges de la masse d'impression (54) transférée sur la surface à imprimer dans l'étape (b) est neutralisée.

5. Procédé selon l'une des revendications 1 à 4, le cylindre support (51) tournant et, dans l'étape (a), une couche de masse d'impression (54) étant appliquée par un système d'application (52) sur le cylindre support (51) et, après l'étape (b), la masse d'impression (54) non détachée étant éliminée par un système d'enlèvement (53) du cylindre support (51).

6. Procédé selon l'une des revendications 1 à 5, où on utilise comme masses d'impression un ou plusieurs des matériaux de formation d'objet suivants : silicones, polyacrylates, polyoléfines, polyuréthanes, polyurées, polynitriles, polyesters, polyéthers, polylactides, polyhydroxyalcanoates, ainsi que des mélanges, des solutions, des dispersions ou des copolymères comprenant un ou plusieurs des matériaux de formation d'objet susmentionnés.

7. Procédé selon l'une des revendications 1 à 6, au moins une masse d'impression étant choisie dans le groupe constitué par les compositions élastomères réticulables de silicone, les gels de silicone, les résines de silicone, les huiles de silicone et les dispersions de silicone.

8. Procédé selon l'une des revendications 1 à 7, où on utilise en plus un ou plusieurs matériaux support comme masse d'impression, qui sont éliminés après la construction de l'objet.

9. Procédé selon l'une des revendications 1 à 8, le point de focalisation (50b) des rayons laser (50a) étant choisi de manière telle qu'il se trouve à l'intérieur du cylindre support dans une plage de 0,01 mm à 10 mm au-dessus de l'interface entre la masse d'impression (54) et le cylindre support (51).

10. Procédé selon l'une des revendications 1 à 9, la plaque (28) étant une plaque à vide mobile, qui fixe la bande continue (9) pour l'étape (b) à une distance déterminée par rapport au cylindre support (51) à revêtir.

11. Procédé selon l'une des revendications 1 à 10, la surface à imprimer de la plaque (28), de la bande continue (9), de la pièce étrangère (7) ou de la couche de masse imprimée appliquée au préalable étant déchargée électrostatiquement par un module de pré-décharge (29) avant l'étape (b) et le cas échéant avant la charge au potentiel Phi_2 ou Phi_3.

12. Procédé selon l'une des revendications 1 à 11, le matériau du cylindre support (51) étant choisi dans le groupe constitué par le verre, le verre à quartz, le poly(téréphtalate d'éthylène), le polycarbonate, le polyimide, le poly(méthacrylate de méthyle), le ZnSe, le ZnS, le BaF₂, le CaF₂, le Ge, le KBr, le NaCl, le MgF₂, le LiF et le Si.

13. Dispositif d'impression 3D pour la fabrication d'objets par impression par transfert au laser comprenant
- au moins une source laser (50) ;
- au moins un cylindre support (51), le matériau du cylindre support (51) étant transparent aux rayons laser (50a) de la source laser (50),
- au moins un système d'application (52), qui est conçu pour revêtir au moins une partie de la surface externe du cylindre support (51) par au moins une masse d'impression (54) ;
- au moins une plaque (28),
la source laser (50) étant agencée au-dessus du cylindre support (51) et conçue pour irradier le cylindre support (51) de telle sorte qu'au moins une partie de la masse d'impression (54) appliquée sur le cylindre support (51) est détachée et transférée sur la plaque (28), sur une pièce étrangère (7) positionnée sur celle-ci ou sur une couche de masse imprimée appliquée au préalable,
le dispositif d'impression 3D étant conçu de manière telle que les rayons laser (50a) frappent, depuis l'extérieur du cylindre support (51) à travers les deux parois du cylindre support (51), directement sur la masse d'impression (54) appliquée sur la face inférieure du cylindre support (51).

14. Dispositif d'impression 3D selon la revendication 13, une bande continue (9) mobile étant agencée sur la plaque (28).

15. Dispositif d'impression 3D selon la revendication 13 ou 14, le dispositif d'impression 3D comprenant au moins un module de charge/décharge (23) qui est conçu pour charger la surface de la masse d'impression (54) appliquée sur le cylindre support (51), la surface de la plaque (28) et/ou la surface cible à imprimer à chaque fois indépendamment les unes des autres à un potentiel Phi déterminé.

16. Dispositif d'impression 3D selon l'une des revendications 13 à 15, le dispositif d'impression 3D comprenant au moins un module de durcissement (22) qui est conçu pour durcir la masse d'impression (54).

17. Dispositif d'impression 3D selon l'une des revendications 13 à 16, le dispositif d'impression 3D comprenant au moins un système d'enlèvement (53) qui est conçu pour éliminer la masse d'impression (54) non détachée du cylindre support (51).
